# EUROPÄISCHE PATENTSCHRIFT

(11) **EP 1 846 827 B1**
(45) Veröffentlichungstag und Bekanntmachung des Hinweises auf die Patenterteilung: **29.09.2010**
(21) Anmeldenummer: 06701281.5
(22) Anmeldetag: 26.01.2006
(51) Int. Cl.: G06F 12/02

(54) **VERFAHREN ZUM ÜBERTRAGEN VON DATEN IN BOTSCHAFTEN ÜBER EINE KOMMUNIKATIONSVERBINDUNG EINES KOMMUNIKATIONSSYSTEMS, SOWIE KOMMUNIKATIONSBAUSTEIN, TEILNEHMER EINES KOMMUNIKATIONSSYSTEMS UND KOMMUNIKATIONSSYSTEM ZUR REALISIERUNG DIESES VERFAHRENS**
METHOD FOR TRANSMITTING DATA IN MESSAGES VIA A COMMUNICATIONS LINK OF A COMMUNICATIONS SYSTEM AND COMMUNICATIONS MODULE, SUBSCRIBER OF A COMMUNICATIONS SYSTEM AND ASSOCIATED COMMUNICATIONS SYSTEM
PROCEDE POUR TRANSMETTRE DES DONNEES DANS DES MESSAGES PAR L'INTERMEDIAIRE D'UNE LIAISON DE COMMUNICATIONS D'UN SYSTEME DE COMMUNICATIONS ET MODULE DE COMMUNICATIONS, ABONNE D'UN SYSTEME DE COMMUNICATIONS ET SYSTEME DE COMMUNICATIONS ASSOCIE

(30) Priorität: 31.01.2005 DE 102005004464
(43) Veröffentlichungstag der Anmeldung: 24.10.2007
(73) Patentinhaber: Robert Bosch GmbH, 70442 Stuttgart (DE)
(72) Erfinder: HORST, Christian, 72144 Dusslingen (DE); BAILER, Franz, 72770 Reutlingen (DE)
(86) Internationale Anmeldenummer: PCT/EP2006/050477
(87) Internationale Veröffentlichungsnummer: WO 2006/079651

(56) Entgegenhaltungen:
- WO-A-2004/098955
- DE-A1- 10 215 719
- US-A- 5 884 040
- US-B1- 6 311 212

## Beschreibung

### Stand der Technik

Die vorliegende Erfindung betrifft ein Verfahren zum Übertragen von Daten in Botschaften, die in vorgebbaren Zeitfenstern über eine Kommunikationsverbindung eines Kommunikationssystems zyklisch übertragen werden. Über die Kommunikationsverbindung zu sendende und gesendete Botschaften werden zunächst in einem Botschaftsspeicher eines Kommunikationsbausteins zwischengespeichert. Die von einem Teilnehmer in einem aktuellen Zeitfenster zu sendende bzw. zu empfangende Botschaft wird aus dem Botschaftsspeicher entnommen und gesendet bzw. empfangen und in dem Botschaftsspeicher abgelegt.

Die Erfindung betrifft außerdem einen Kommunikationsbaustein nach dem Oberbegriff des Anspruchs 13, einen Teilnehmer eines Kommunikationssystems nach dem Oberbegriff des Anspruchs 17 und ein Kommunikationssystem nach dem Oberbegriff des Anspruchs 20 zur Realisierung dieses Verfahrens.

Die Vernetzung von Teilnehmern, bspw. in Form von Steuergeräten, Sensorik und Aktuatorik, mit Hilfe einer Kommunikationsverbindung eines Kommunikationssystems hat in den letzten Jahren beim Bau von modernen Kraftfahrzeugen oder auch im Maschinenbau, insbesondere im Werkzeugmaschinenbereich, also auch in der Automatisierung, drastisch zugenommen. Synergieeffekte durch die Verteilung von Funktionen auf mehrere Teilnehmer können dabei erzielt werden. Man spricht hierbei von verteilten Systemen. Die Kommunikation zwischen den verschiedenen Teilnehmern findet mehr und mehr über eine als Datenbus ausgebildete Kommunikationsverbindung eines als Bussystem ausgebildeten Kommunikationssystems statt. Der Kommunikationsverkehr auf dem Bussystem, Zugriffs- und Empfangsmechanismen sowie Fehlerbehandlung werden über ein Protokoll geregelt. Ein bekanntes Protokoll hierzu ist das CAN (Controller Area Network)-Protokoll oder auch das TTCAN (Time Triggered CAN)-Protokoll, sowie das FlexRay-Protokoll, wobei im Augenblick die FlexRay-Protokollspezifikation v2.1 zugrunde liegt.

FlexRay ist ein schnelles, deterministisches und fehlertolerantes Bussystem, insbesondere für den Einsatz in einem Kraftfahrzeug. Das FlexRay-Protokoll arbeitet nach dem Verfahren des Time-Division-Multiple-Access (TDMA), wobei den Teilnehmern (oder Komponenten) bzw. den zu übertragenden Botschaften feste Zeitschlitze oder Zeitfenster zugewiesen werden, in denen sie einen exklusiven Zugriff auf die Kommunikationsverbindung haben. Vergleichbar wird dies auch beim TTCAN umgesetzt. Die Zeitschlitze wiederholen sich dabei in einem festgelegten Zyklus, dem sog. Kommunikationszyklus, sodass der Zeitpunkt, zu dem eine Botschaft über den Datenbus übertragen wird, exakt vorausgesagt werden kann und der Buszugriff deterministisch erfolgt.

Um die Bandbreite für die Botschaftsübertragung auf dem Bussystem optimal zu nutzen, unterteilt FlexRay den Kommunikationszyklus in einen statischen Teil, das sog. statische Segment, und einen dynamischen Teil, das sog. dynamische Segment. Die Zeitschlitze mit einer fest vorgegebenen Länge befinden sich dabei im statischen Teil am Anfang eines Buszyklusses. Im dynamischen Teil werden die Zeitschlitze dynamisch vergeben. Darin wird der exklusive Buszugriff jeweils nur für eine kurze Zeit, sogenannte Minislots, ermöglicht. Nur wenn innerhalb eines Minislots durch einen der Teilnehmer ein Buszugriff erfolgt, wird der entsprechende Zeitschlitz auf die für die Datenübertragung durch den Teilnehmer benötigte Zeitdauer verlängert. Damit wird Bandbreite also nur dann verbraucht, wenn sie auch tatsächlich zur Datenübertragung benötigt wird. Das dynamische Segment kann zur ereignisgesteuerten Datenübertragung genutzt werden.

In einem FlexRay-Kommunikationssystem wird über zwei physikalisch getrennte Leitungen, die auch als Kanäle bezeichnet werden, mit einer Datenrate von derzeit jeweils maximal 10 MB pro Sekunde kommuniziert. Die beiden Kanäle entsprechen dabei der physikalischen Schicht, insbesondere des OSI (Open System Architecture) Schichtenmodells. Diese dienen hauptsächlich der redundanten und damit fehlertoleranten Übertragung von Botschaften, können jedoch auch unterschiedliche Botschaften übertragen, wodurch dann die Datenrate auf derzeit 20 MB verdoppelt werden kann. Selbstverständlich kann FlexRay aber auch mit niedrigeren Datenraten betrieben werden.

Um synchrone Funktionen zu realisieren und die Bandbreite durch kleine Abstände zwischen zwei Botschaften zu optimieren, benötigen die verteilten Komponenten in dem Kommunikationsnetzwerk, also die Teilnehmer in dem Kommunikationssystem, eine gemeinsame Zeitbasis, die sogenannte globale Zeit. Die Teilnehmer verfügen über eigene lokale Uhren, die auf die globale Zeit synchronisiert werden. Für die Uhrensynchronisation werden Synchronisationsnachrichten im statischen Teil des Zyklus übertragen. Die Uhrensynchronisation erfolgt am Ende eines jeden Kommunikationszyklus während der sog. Network Idle Time (NIT). Mit Hilfe eines speziellen Algorithmus entsprechend der FlexRay-Spezifikation werden die lokalen Uhrzeiten der Komponenten so korrigiert, dass alle lokalen Uhren zu einer globalen Uhr synchron laufen. Diese Synchronisation erfolgt vergleichbar auch in einem TTCANNetzwerk.

Ein FlexRay-Teilnehmer, der auch als FlexRay-Netzknoten bezeichnet wird, enthält einen Teilnehmerprozessor, also einen Host-Prozessor, einen FlexRay-Controller oder Kommunikationscontroller, eine Verbindung zur physikalischen Schicht, den Bustreiber (sog. Bus Driver BD), sowie bei Realisierung einer Busüberwachung einen Bus Guardian (BG). Dabei liefert und verarbeitet der Host-Prozessor die Daten, die über den FlexRay-Kommunikationscontroller übertragen bzw. empfangen werden. Für die Kommunikation in einem FlexRay-Netzwerk können Botschaften bzw. Botschaftsobjekte mit z. B. bis zu 254 Datenbytes konfiguriert werden. Um nun diese Botschaften bzw. Botschaftsobjekte zwischen physikalischer Schicht, also der Kommunikationsverbindung, und dem Host-Prozessor zu übertragen, wird ein Kommunikationsbaustein, insbesondere ein Kommunikationscontroller, eingesetzt.

Der Kommunikationsbaustein verfügt über einen Botschaftsspeicher, in dem von einem dem Kommunikationsbaustein zugeordneten Teilnehmer zu sendende Botschaftsobjekte bzw. von dem Teilnehmer zu empfangende Botschaftsobjekte zwischengespeichert werden, bevor sie zum Senden an die Kommunikationsverbindung bzw. zur weiteren Verarbeitung an den Host-Prozessor weitergegeben werden. Anzahl und Größe der Datenfelder des Botschaftsspeichers werden während einer Konfigurationsphase oder Re-Konfigurationsphase des Kommunikationssystems konfiguriert.

Im Stand der Technik wird der Botschaftsspeicher zu Beginn eines jeden Zeitschlitzes von einem Botschaftsverwalter durchsucht, um diejenigen Datenfelder zu ermitteln, in denen Botschaften abgelegt oder noch abzulegen sind, die über den aktuellen Kanal, in dem aktuellen Kommunikationszyklus und/oder in dem aktuellen Zeitschlitz zu senden bzw. zu empfangen sind. So wird beim Durchsuchen des Botschaftsspeichers bspw. ein Datenfeld ermittelt, das für eine Botschaft vorgesehen ist, welche in dem aktuellen Kommunikationszyklus und in dem aktuellen Zeitschlitz über den aktuellen betrachteten Kanal empfangen werden soll. Nach dem Empfang der Botschaft wird diese dann in dem ermittelten Datenfeld abgelegt. Ebenso kann beim Durchsuchen des Botschaftsspeichers bspw. ein Datenfeld ermittelt werden, in dem eine Botschaft abgelegt ist, welche in dem aktuellen Kommunikationszyklus und in dem aktuellen Zeitschlitz über den aktuellen betrachteten Kanal gesendet werden soll. Diese Botschaft wird dann aus dem ermittelten Datenfeld entnommen und zum Senden an die Kommunikationsverbindung weitergegeben.

Als Stand der Technik können beispielsweise die in den WO 2004/098955A, US 5884040A und US 6311212B1 dargestellten Kommunikationsverfahren herangezogen werden.

Es hat sich jedoch als nachteilig erwiesen, dass der Suchdurchlauf, insbesondere bei größeren Botschaftsspeichern, relativ viel Zeit beansprucht und es aufgrund des Suchdurchlaufs zu Verzögerungen beim Empfang bzw. beim Versenden von Botschaften kommen kann. Dadurch, dass in jedem Zeitschlitz der gesamte Botschaftsspeicher durchsucht wird, kann es zu Beeinträchtigungen der Echtzeitfähigkeit des Kommunikationssystems kommen.

Der vorliegenden Erfindung liegt deshalb die Aufgabe zugrunde, den Suchdurchlauf durch den Botschaftsspeicher derart auszugestalten, dass die Übertragung von Botschaften in optimaler Weise unterstützt wird und insbesondere die Echtzeitfähigkeit des Kommunikationssystems selbst bei größeren Botschaftsspeichern noch sichergestellt werden kann.

Zur Lösung dieser Aufgabe wird ausgehend von dem Datenübertragungsverfahren der eingangs genannten Art vorgeschlagen, dass zur Ermittlung der Positionen der Botschaften in dem Botschaftsspeicher dieser in regelmäßigen Abständen jeweils für mehrere noch folgende Zeitfenster im Voraus durchsucht wird, und dass als Ergebnis eines Suchdurchlaufs die Positionen der in den mehreren noch folgenden Zeitfenstem zu sendenden bzw. zu empfangenden Botschaften in einem dem Botschaftsspeicher zugeordneten Zwischenspeicher abgelegt werden.

### Vorteile der Erfindung

Erfindungsgemäß wird also vorgeschlagen, den Botschaftsspeicher nicht in jedem Zeitschlitz vollständig zu durchsuchen, sondern vielmehr einen Suchdurchlauf für mehrere zukünftige Zeitschlitze durchzuführen. Das heißt, mit einem einzigen Suchdurchlauf werden die Positionen der Botschaften in dem Botschaftsspeicher für mehrere zukünftige Zeitschlitze ermittelt. Die im Rahmen des Suchdurchlaufs ermittelten Positionen werden in einem Zwischenspeicher abgelegt und können später im Rahmen der eigentlichen Datenübertragung nahezu ohne Zeitverzögerung aus diesem abgerufen werden. Im Rahmen der eigentlichen Datenübertragung ist also ein kompletter Suchdurchlauf des gesamten Botschaftsspeichers nicht erforderlich. Dadurch kann die Echtzeitfähigkeit des erfindungsgemäßen Kommunikationssystems entscheidend verbessert werden.

Gemäß einer vorteilhaften Weiterbildung der Erfindung wird vorgeschlagen, dass im Rahmen der Datenübertragung die in dem aktuellen Zeitfenster über das Kommunikationssystem zu übertragende Botschaft aus der in dem Zwischenspeicher für dieses Zeitfenster angegebenen Position des Botschaftsspeichers ausgelesen und über die Kommunikationsverbindung übertragen wird bzw. die in dem aktuellen Zeitfenster über die Kommunikationsverbindung übertragene Botschaft an der in dem Zwischenspeicher für dieses Zeitfenster angegebenen Position des Botschaftsspeichers abgelegt wird. Wenn also im Rahmen der eigentlichen Datenübertragung eine Botschaft aus dem Botschaftsspeicher gesendet werden soll, wird einfach auf die entsprechende Stelle in dem Zwischenspeicher zugegriffen, dann auf die in dem Zwischenspeicher abgelegte Position des Botschaftsspeichers zugegriffen, die dort gespeicherte Botschaft entnommen und zum Senden an die Kommunikationsverbindung weitergeleitet. Ebenso kann, wenn im Rahmen der eigentlichen Datenübertragung eine Botschaft empfangen und in dem Botschaftsspeicher gespeichert werden soll, einfach auf die entsprechende Stelle in dem Zwischenspeicher zugegriffen und die über die Kommunikationsverbindung empfangene Botschaft an der in dem Zwischenspeicher abgelegten Position des Botschaftsspeichers gespeichert werden.

Gemäß einer bevorzugten Ausführungsform der Erfindung wird vorgeschlagen, dass die Datenübertragung für das aktuelle Zeitfenster und die nachfolgenden mehreren Zeitfenster, für welche die Positionen der Botschaften in dem Botschaftsspeicher in dem Zwischenspeicher bereits abgelegt wurden, zeitgleich mit dem Suchdurchlauf für das sich an das letzte Zeitfenster der Datenübertragung anschließende Zeitfenster und die nachfolgenden mehreren Zeitfenster ausgeführt wird. Das bedeutet also, dass die eigentliche Datenübertragung für die zukünftigen Zeitschlitze 1...n (n>1) und der Suchdurchlauf für die nachfolgenden zukünftigen Zeitschlitze (n+1)...2n parallel ablaufen. Für diese Ausführungsform ist der Zustandsspeicher so groß gewählt, dass er 2n Datenfelder umfasst, nämlich n Datenfelder, in denen die Positionen der Botschaften in dem Botschaftsspeicher für die Datenübertragung abgelegt werden können, und n weitere Datenfelder, in denen die im Rahmen des aktuellen Suchdurchlaufs ermittelten Positionen der Botschaften in dem Botschaftsspeicher abgelegt werden können. Vorzugsweise wurden die Positionen der Botschaften in dem Botschaftsspeicher für die eigentliche Datenübertragung in dem vorangegangenen Suchdurchlauf ermittelt und in dem Zwischenspeicher abgelegt. Auf die beiden n Datenfelder des Zwischenspeichers wird vorzugsweise wechselweise zugegriffen, jeder der n Datenfelder einmal zum Speichern der Positionen im Rahmen des Suchdurchlaufs und dann zum Abrufen der gespeicherten Positionen im Rahmen der eigentlichen Datenübertragung dient, wobei die beiden n Datenfelder niemals gleichzeitig im Rahmen eines Suchdurchlaufs oder einer Datenübertragung genutzt werden, sondern immer versetzt zueinander. Mit dieser Ausführungsform kann zusätzlich Verarbeitungszeit für den Suchdurchlauf eingespart werden, so dass die Echtzeitfähigkeit des Kommunikationssystems praktisch immer gegeben ist. Der Suchdurchlauf wird vorzugsweise von einer eigenen Recheneinheit, bspw. einem sog. Zustandsautomaten (Finite-State-Maschine), koordiniert und ausgeführt.

Vorteilhafterweise ist die Anzahl der mehreren Zeitfenster des Suchdurchlaufs gleich groß wie die Anzahl der mehreren Zeitfenster für die eigentliche Datenübertragung. Wenn also nach dem erfindungsgemäßen Verfahren Daten übertragen (empfangen oder gesendet) werden sollen, werden für mehrere zukünftige Zeitschlitze nacheinander ein Suchdurchlauf und dann die eigentliche Datenübertragung (Senden oder Empfangen von Daten) ausgeführt. Falls die eigentliche Datenübertragung für mehrere zukünftige Zeitschlitze und der Suchdurchlauf für mehrere noch weiter in der Zukunft liegende Zeitschlitze wechselweise parallel ausführt wird, ist es erforderlich, dass die Anzahl der zukünftigen Zeitschlitze, für die die eigentliche Datenübertragung ausgeführt wird und für die der Suchdurchlauf ausgeführt wird, gleich groß ist, damit zwischen den beiden Speicherbereichen des Zwischenspeichers jeweils umfassend eine der Anzahl der zukünftigen Zeitschlitze entsprechende Anzahl an Datenfelder umgeschaltet werden kann.

Deshalb wird vorgeschlagen, dass der Zwischenspeicher unterteilt ist, wobei in einem ersten Teil des Zwischenspeichers für die Datenübertragung die Positionen der Botschaften für das aktuelle Zeitfenster und die nachfolgenden mehreren Zeitfenster, für welche in dem Botschaftsspeicher in dem Zwischenspeicher bereits abgelegt wurden, abgelegt sind und in einem zweiten Teil des Zwischenspeichers für einen Suchdurchlauf die Positionen der Botschaften für das sich an das letzte Zeitfenster der Datenübertragung anschließende Zeitfenster und die nachfolgenden mehreren Zeitfenster abgelegt werden.

Gemäß einer anderen vorteilhaften Weiterbildung der Erfindung wird vorgeschlagen, dass in den in dem Botschaftsspeicher zu speichernden Botschaften erste Daten mit einem ersten Datenumfang und zweite Daten mit einem zweiten Datenumfang enthalten sind und die ersten Daten in ein Kopfsegment des Botschaftsspeichers in je einem Kopfbereich pro Botschaft gespeichert werden und die zweiten Daten in ein Datensegment in je einem Datenbereich pro Botschaft gespeichert werden. Die Unterteilung des Botschaftsspeichers in Kopfsegment und Datensegment, sowie die Anzahl und Größe der Datenbereiche in dem Datensegment, erfolgt vorzugsweise im Rahmen einer Konfiguration des Botschaftsspeichers den Anforderungen entsprechend variabel. Damit ergeben sich diverse Vorteile: So kann der Anwender bei der Programmierung entscheiden ob er eine größere Anzahl von Botschaften mit kleinem Datenfeld oder ob er eine kleinere Anzahl von Botschaften mit großem Datenfeld verwenden möchte. Bei der Konfiguration von Botschaften mit unterschiedlich großem Datenbereich wird der vorhandene Speicher optimal ausgenutzt. Der Anwender hat die Möglichkeit einen Datenbereich gemeinsam für unterschiedliche Botschaften zu benutzen. Bei der Implementierung des Kommunikationscontrollers, also des Kommunikationsbausteins, auf einer integrierten Schaltung kann die Größe des Botschaftsspeichers durch Anpassung der Speichertiefe des verwendeten Speichers, insbesondere RAM-Speichers an die Bedürfnisse der Applikation exakt angepasst werden, ohne die sonstigen Funktionen des Kommunikationscontrollers oder Kommunikationsbausteins zu ändern.

Eine Konfiguration des Botschaftsspeichers erfolgt lediglich über das Kopfsegment. In den Kopfbereichen werden für die Botschaften der Kanal, der Zyklus und der Zeitschlitz festgelegt, in dem die Botschaft übertragen (empfangen oder gesendet) werden soll. Außerdem kann im Rahmen der Konfiguration für jede Botschaft die Größe des Datenteils im Datensegment des Botschaftsspeichers, ein Zeiger auf den Anfang des Datenteils, und eine Information, ob es sich um eine zu sendende oder um eine zu empfangende Botschaft handelt, festgelegt werden.

Gemäß einer weiteren Ausgestaltung der Erfindung ist in dem Kopfbereich des Botschaftsspeichers pro Botschaft eine Kennung abgelegt, welche die jeweilige Botschaft identifiziert und durch welche die Botschaft einem bestimmten Kommunikationszyklus und einem bestimmten Zeitfenster innerhalb des Zyklus zugeordnet werden kann. Der Teil des Kopfbereichs, in dem die Kennung abgelegt ist wird auch als Identifikationsfeld bezeichnet.

Vorteilhafterweise sind für jede der während eines Suchdurchlaufs betrachtete und in einem der mehreren noch folgenden Zeitfenster zu sendende bzw. zu empfangende Botschaft in dem Zwischenspeicher zwei Felder vorgesehen, wobei in einem ersten Feld ein Zeiger auf die entsprechende Position der in dem Botschaftsspeicher abgelegten Botschaft und in einem zweiten Feld ein Status der in dem Botschaftsspeicher abgelegten Botschaft abgelegt wird. Der Zeiger zeigt vorzugsweise auf in einem Kopfbereich im Kopfsegment gespeicherte erste Daten der in dem Botschaftsspeicher abgelegten Botschaft.

Als Status der in dem Botschaftsspeicher abgelegten Botschaft sind in dem Zwischenspeicher vorzugsweise Informationen abgelegt, ob für das betrachtete Zeitfenster überhaupt eine Botschaft zu empfangen bzw. zu senden ist ('empty') und/oder ob die Botschaft zu senden ('tx_buf') oder zu empfangen ('rx_buf') ist. Falls die Botschaft weder zu senden noch zu empfangen ist, wird der Status auf 'empty' gesetzt.

Bei der derzeit gültigen FlexRay-Spezifikation v2.1 und den derzeit verfügbaren Hardware- und Software-Komponenten zur Realisierung eines FlexRay-Kommunikationssystems ist es besonders vorteilhaft, wenn zur Ermittlung der Positionen der Botschaften in dem Botschaftsspeicher dieser in regelmäßigen Abständen jeweils für vier noch folgende Zeitfenster im Voraus durchsucht wird, und als Ergebnis eines Suchdurchlaufs die Positionen der in den vier noch folgenden Zeitfenstern zu sendenden bzw. zu empfangenden Botschaften in dem Zwischenspeicher abgelegt werden. Selbstverständlich kann der Suchdurchlauf auch für lediglich zwei oder aber auch für mehr als vier Zeitschlitze im Voraus ausgeführt werden. Vorzugsweise ist die Anzahl der Zeitschlitze, für welche der Suchdurchlauf im Voraus ausgeführt wird, eine Zahl aus der Menge 2^{x}, wobei x eine ganze natürliche Zahl größer 1 ist. Somit ergibt sich für die Anzahl der Zeitschlitze vorzugsweise: 2, 4, 8, 16, 32, ....

Gemäß einer bevorzugten Ausführungsform der Erfindung wird vorgeschlagen, dass im Rahmen eines Suchdurchlaufs der Botschaftsspeicher für die mehreren noch folgenden Zeitfenster nach einem oder mehreren der nachfolgenden Kriterien durchsucht wird:
- Ermittlung, ob in dem Botschaftsspeicher Botschaften für einen betrachteten Übertragungskanal gespeichert sind,
- Ermittlung, ob in dem Botschaftsspeicher Botschaften für einen betrachteten Kommunikationszyklus gespeichert sind,
- Ermittlung, ob in dem Botschaftsspeicher Botschaften für die mehreren noch folgenden Zeitfenster gespeichert sind, und
- Ermittlung, ob es sich bei den ermittelten Botschaften um zu sendende oder zu empfangende Botschaften handelt.

Falls im Rahmen des Suchdurchlaufs in dem Botschaftsspeicher für den aktuell betrachteten Kanal (Channel A oder Channel B), für den aktuellen Kommunikationszyklus und für die betrachteten zukünftigen Zeitschlitze zu sendende Botschaften gefunden werden, wird an der dem betrachteten Zeitschlitz entsprechenden Stelle im Zwischenspeicher 'Tx_buf' abgelegt. Falls im Rahmen des Suchdurchlaufs in dem Botschaftsspeicher für den aktuell betrachteten Kanal (Channel A oder Channel B), für den aktuellen Kommunikationszyklus und für die betrachteten zukünftigen Zeitschlitze Datenfelder für zu empfangende Botschaften gefunden werden, wird an der dem betrachteten Zeitschlitz entsprechenden Stelle im Zwischenspeicher 'Rx_buf' abgelegt. Falls im Rahmen des Suchdurchlaufs in dem Botschaftsspeicher für den aktuell betrachteten Kanal (Channel A oder Channel B), für den aktuellen Kommunikationszyklus und für die betrachteten zukünftigen Zeitschlitze weder eine zu sendende Botschaft noch ein Datenfeld für eine zu empfangende Botschaft gefunden wird, wird an der dem betrachteten Zeitschlitz entsprechenden Stelle im Zwischenspeicher 'empty' abgelegt, falls dies nicht schon bereits vor dem Beginn des Suchdurchlaufs dort abgelegt worden ist.

Im Rahmen des Suchdurchlaufs werden die nachfolgend angegebenen Informationen der in dem Botschaftsspeicher abgelegten Botschaften abgefragt:
- CH A, CH B: zum Feststellen, ob der Kanal, für den die Botschaft vorgesehen ist, dem betrachteten Kanal entspricht,
- Cycle Code: zum Feststellen, ob der Kommunikationszyklus, für den die Botschaft vorgesehen ist, dem betrachteten Kommunikationszyklus entspricht,
- Frame ID: zum Feststellen, ob der Zeitschlitz, für den die Botschaft vorgesehen ist, dem aktuellen Zeitschlitz entspricht, und
- TXM (Transmission Mode): zum Feststellen, ob die Botschaft zum Versenden (TXM=1) oder zum Empfangen (TXM=0) vorgesehen ist.

Die abzufragenden Informationen sind vorzugsweise in den genannten Status-Bits (CH A, CH B, Cycle Code, TXM) als Teil der ersten Daten in den Kopfbereichen im Kopfsegment des Botschaftsspeichers enthalten.

Als eine weitere Lösung der Aufgabe der vorliegenden Erfindung wird ausgehend von dem Kommunikationsbaustein der eingangs genannten Art vorgeschlagen, dass der Kommunikationsbaustein zur Ermittlung der Positionen der Botschaften in dem Botschaftsspeicher Mittel zum Durchsuchen des Botschaftsspeichers in regelmäßigen Abständen jeweils für mehrere noch folgende Zeitfenster im Voraus, einen dem Botschaftsspeicher zugeordneten Zwischenspeicher und Mittel zum Ablegen der Positionen der in den mehreren noch folgenden Zeitfenstern zu sendenden bzw. zu empfangenden Botschaften in dem Zwischenspeicher als Ergebnis eines Suchdurchlaufs aufweist.

Gemäß einer vorteilhaften Weiterbildung der Erfindung wird vorgeschlagen, dass die Mittel zum Durchsuchen des Botschaftsspeichers und die Mittel zum Ablegen der Positionen der ermittelten Botschaften in dem Zwischenspeicher als ein Zustandsautomat ausgebildet sind

Gemäß einer bevorzugten Ausführungsform der Erfindung wird vorgeschlagen, dass der Kommunikationsbaustein als ein FlexRay-Kommunikationsbaustein zum Empfangen, Senden und Zwischenspeichern von nach einer FlexRay-Spezifikation übermittelten Botschaften ausgebildet ist.

Vorteilhafterweise sind die Mittel zum Durchsuchen des Botschaftsspeichers und die Mittel zum Ablegen der Positionen der ermittelten Botschaften in dem Zwischenspeicher zur Ausführung eines Verfahrens nach einem der Ansprüche 2 bis 12 ausgebildet.

Als noch eine weitere Lösung der Aufgabe der vorliegenden Erfindung wird ausgehend von dem Teilnehmer des Kommunikationssystems der eingangs genannten Art vorgeschlagen, dass der Kommunikationsbaustein zur Ermittlung der Positionen der Botschaften in dem Botschaftsspeicher Mittel zum Durchsuchen des Botschaftsspeichers in regelmäßigen Abständen jeweils für mehrere noch folgende Zeitfenster im Voraus, einen dem Botschaftsspeicher zugeordneten Zwischenspeicher und Mittel zum Ablegen der Positionen der in den mehreren noch folgenden Zeitfenstern zu sendenden bzw. zu empfangenden Botschaften in dem Zwischenspeicher als Ergebnis eines Suchdurchlaufs aufweist.

Gemäß einer vorteilhaften Weiterbildung der Erfindung wird vorgeschlagen, dass der Teilnehmer einen Host-Rechner umfasst, der zusammen mit dem Kommunikationsbaustein auf einem gemeinsamen Halbleiterbauelement integriert ist. Der Host-Rechner ist vorzugsweise als ein Mikroprozessor ausgebildet.

Gemäß einer bevorzugten Ausführungsform der Erfindung wird vorgeschlagen, dass der Kommunikationsbaustein nach einem der Ansprüche 14 bis 16 ausgebildet ist.

Schließlich wird als eine weitere Lösung der Aufgabe der vorliegenden Erfindung ausgehend von dem Kommunikationssystem der eingangs genannten Art vorgeschlagen, dass der Kommunikationsbaustein zur Ermittlung der Positionen der Botschaften in dem Botschaftsspeicher Mittel zum Durchsuchen des Botschaftsspeichers in regelmäßigen Abständen jeweils für mehrere noch folgende Zeitfenster im Voraus, einen dem Botschaftsspeicher zugeordneten Zwischenspeicher und Mittel zum Ablegen der Positionen der in den mehreren noch folgenden Zeitfenstern zu sendenden bzw. zu empfangenden Botschaften in dem Zwischenspeicher als Ergebnis eines Suchdurchlaufs aufweist.

Gemäß einer vorteilhaften Weiterbildung der Erfindung wird vorgeschlagen, dass der Kommunikationsbaustein nach einem der Ansprüche 14 bis 16 ausgebildet ist.

### Zeichnungen

Weitere Vorteile und vorteilhafte Ausgestaltungen der Erfindung ergeben sich aus den Merkmalen der Ansprüche sowie aus den Figuren und der Beschreibung. Es zeigen:
- Figur 1: in schematischer Darstellung einen Kommunikationsbaustein und dessen Anbindung an die Kommunikationsverbindung und den Teilnehmer,
- Figur 2: eine spezielle Ausführungsform des Kommunikationsbausteins aus Figur 1 sowie dessen Anbindung im Detail,
- Figur 3: die Struktur eines Botschaftsspeichers des Kommunikationsbaustein nach Figur 1 oder 2 im Detail,
- Figur 4 bis 6: schematisch die Architektur und den Prozess des Datenzugriffs in Richtung vom Teilnehmer zum Botschaftsspeicher,
- Figur 7 bis 9: schematisch die Architektur und den Prozess des Datenzugriffs in Richtung vom Botschaftsspeicher zum Teilnehmer,
- Figur 10: schematisch einen Botschaftsverwalter des Kommunikationsbaustein nach Figur 1 oder 2 und darin enthaltene Zustandsautomaten,
- Figur 11: noch einmal schematisch einige Bauteile des Kommunikationsbausteins sowie den Teilnehmer und die entsprechenden, durch den Botschaftsverwalter gesteuerten Datenpfade,
- Figur 12: die Zugriffsverteilung bezogen auf die Datenpfade aus Figur 11,
- Figur 13: einen Zwischenspeicher eines erfindungsgemäßen Kommunikationsbausteins,
- Figur 14: ein Ablaufdiagramm des Suchverfahrens zur Ausführung im Rahmen des erfindungsgemäßen Datenübertragungsverfahrens, und
- Figur 15: ein Ablaufdiagramm des erfindungsgemäßen Datenübertragungsverfahrens gemäß einer bevorzugten Ausführungsform.

### Ausführungsbeispiele

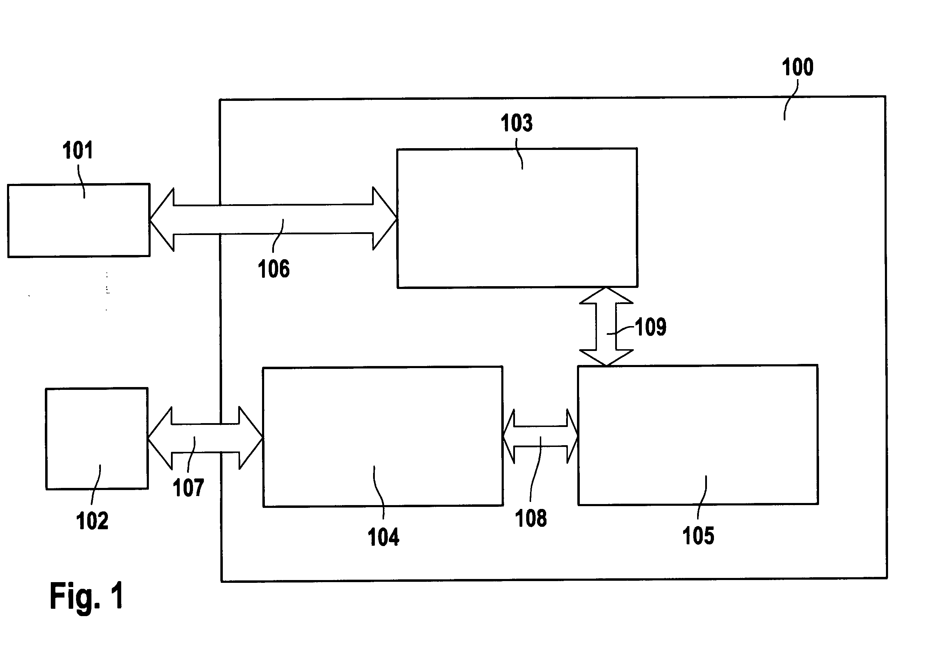

Figur 1 zeigt schematisch einen FlexRay-Kommunikationsbaustein 100 zur Anbindung eines Teilnehmers oder Hosts 102 an eine FlexRay-Kommunikationsverbindung 101, also an die physikalische Schicht des FlexRay-Kommunikationssystems. Der Kommunikationsbaustein 100 wird auch als FlexRay-IP-Modul oder als E-Ray-Controller bezeichnet. Funktional gesehen umfasst der Kommunikationsbaustein 100 einen FlexRay-Kommunikatinoscontroller. Der FlexRay-Kommunikationsbaustein 100 ist über eine Verbindung 107 mit dem Teilnehmer bzw. Teilnehmerprozessor 102 (auch Hostprozessor) und über eine Verbindung 106 mit der Kommunikationsverbindung 101 verbunden. Zur problemlosen Anbindung zum einen bezogen auf Übertragungszeiten und zum anderen bezogen auf die Datenintegrität sind schematisch im Wesentlichen drei Anordnungen im FlexRay-Kommunikationsbaustein 100 unterschieden.

Dabei dient eine erste Anordnung 105 zur Speicherung, insbesondere Zwischenablage, wenigstens eines Teils der zu übertragenden, das heißt von dem Teilnehmer 102 zu sendenden oder zu empfangenden, Botschaften. Zwischen dem Teilnehmer 102 und dieser ersten Anordnung 105 ist über die Verbindungen 107 und 108 eine zweite Anordnung 104 geschaltet. Ebenso ist zwischen die Kommunikationsverbindung 101 und die erste Anordnung 105 über die Verbindungen 106 und 109 eine dritte Anordnung 103 geschaltet, wodurch ein sehr flexibles Eingeben und Ausgeben von Daten als Teil von Botschaften, insbesondere FlexRay-Botschaften, in bzw. aus der ersten Anordnung 105 mit Gewährleistung der Datenintegrität bei optimaler Geschwindigkeit erzielbar ist.

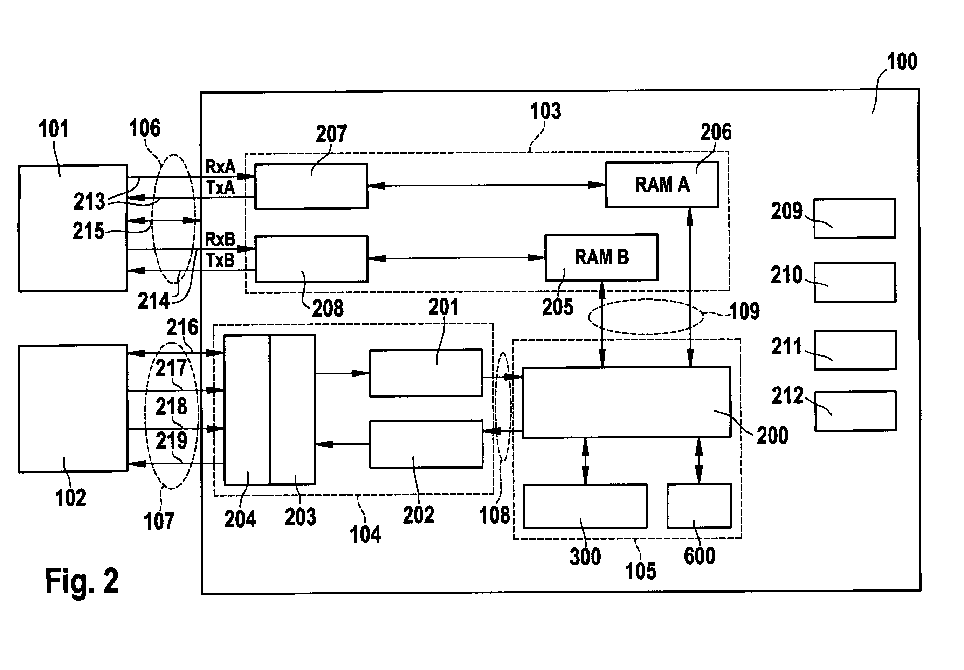

In Figur 2 ist der Kommunikationsbaustein 100 in einer bevorzugten Ausführungsform etwas detaillierter dargestellt. Ebenso detaillierter dargestellt sind die jeweiligen Verbindungen 106 bis 109. Die zweite Anordnung 104 enthält dabei einen Eingangspufferspeicher oder Eingabepufferspeicher 201 (Input Buffer IBF), einen Ausgangspufferspeicher oder Ausgabepufferspeicher 202 (Output Buffer OBF) sowie einen Schnittstellenbaustein bestehend aus zwei Teilen 203 und 204, wobei der eine Teilbaustein 203 (Generic CPU Interface, GIF) teilnehmerunabhängig und der zweite Teilbaustein 204 teilnehmerspezifisch ist. Der teilnehmerspezifische Teilbaustein 204 (Customer CPU Interface CIF) verbindet eine teilnehmerspezifische Host-CPU 102, also einen kundenspezifischen Teilnehmer, mit dem restlichen FlexRay-Kommunikationsbaustein 100. Dazu ist eine bidirektionale Datenleitung 216, eine Adressleitung 217 sowie ein Steuereingang 218 vorgesehen. Ebenso vorgesehen ist mit 219 ein Interrupt- oder Unterbrechungs-Ausgang.

Der teilnehmerspezifische Teilbaustein 204 steht in Verbindung mit einem teilnehmerunabhängigen Teilbaustein 203, d. h. der FlexRay-Kommunikationsbaustein 100 verfügt über ein generisches, also allgemeines, CPU-Interface, an das sich über entsprechende teilnehmerspezifische Teilbausteine 204, also Customer CPU Interfaces CIF, eine große Anzahl von unterschiedlichen kundenspezifischen Host CPUs anschließen lassen. Dadurch muss abhängig vom Teilnehmer nur der teilnehmerspezifische Teilbaustein 204 variiert werden, wohingegen der restliche Kommunikationsbaustein 100 teilnehmerunabhängig stets gleich ausgebildet werden kann, was einen deutlich geringeren Aufwand bedeutet. Der teilnehmerspezifische Teilbaustein 204 passt bspw. die Bitbreite des FlexRay-Kommunikationsbausteins 100 (z.B. 16 Bit) an die Bitbreite der angeschlossenen Host-CPU 102 (z.B. 8, 16, oder 32 Bit) an.

Der Eingabepufferspeicher oder Eingangspufferspeicher 201 und der Ausgangspufferspeicher oder Ausgabepufferspeicher 202 können in einem gemeinsamen Speicherbaustein oder aber in getrennten Speicherbausteinen ausgebildet sein. Dabei dient der Eingabepufferspeicher 201 für die Zwischenspeicherung von Botschaften für die Übertragung vom Host-CPU 102 zum Botschaftsspeicher 300. Der Eingabepufferbaustein 201 ist vorzugsweise so ausgebildet, dass er zwei vollständige Botschaften bestehend aus jeweils einem Kopfsegment oder Headersegment HS, insbesondere mit Konfigurationsdaten, und ein Datensegment DS oder Payload Segment speichern kann. Dabei ist der Eingabepufferspeicher 201 zweiteilig (Teilpufferspeicher und Schattenspeicher) ausgebildet, wodurch sich durch wechselweises Schreiben der beiden Teile des Eingabepufferspeichers 201 bzw. durch Zugriffswechsel die Übertragung zwischen Teilnehmer-CPU 102 und Botschaftsspeicher 300 beschleunigen lässt.

Ebenso dient der Ausgabepufferspeicher oder Ausgangspufferspeicher (Output-Buffer OBF) 202 für die Zwischenspeicherung von Botschaften für die Übertragung vom Botschaftsspeicher 300 zur Teilnehmer-CPU 102. Dabei ist auch der Ausgabepufferbaustein 202 so gestaltet, dass zwei komplette Botschaften bestehend aus Kopfsegment HS, insbesondere mit Konfigurationsdaten, und Datensegment DS, also Payload Segment, gespeichert werden können. Auch hier ist der Ausgabepufferspeicher 202 in zwei Teile, einen Teilpufferspeicher und einen Schattenspeicher, aufgeteilt, wodurch sich auch hier durch wechselweises Lesen der beiden Teile des Ausgabepufferspeichers 202 bzw. durch Zugriffswechsel die Übertragung zwischen Botschaftsspeicher 300 und Teilnehmer- bzw. Host-CPU 102 beschleunigen lässt. Die zweite Anordnung 104 bestehend aus den Blöcken 201 bis 204 ist mit der ersten Anordnung 105 wie dargestellt verbunden.

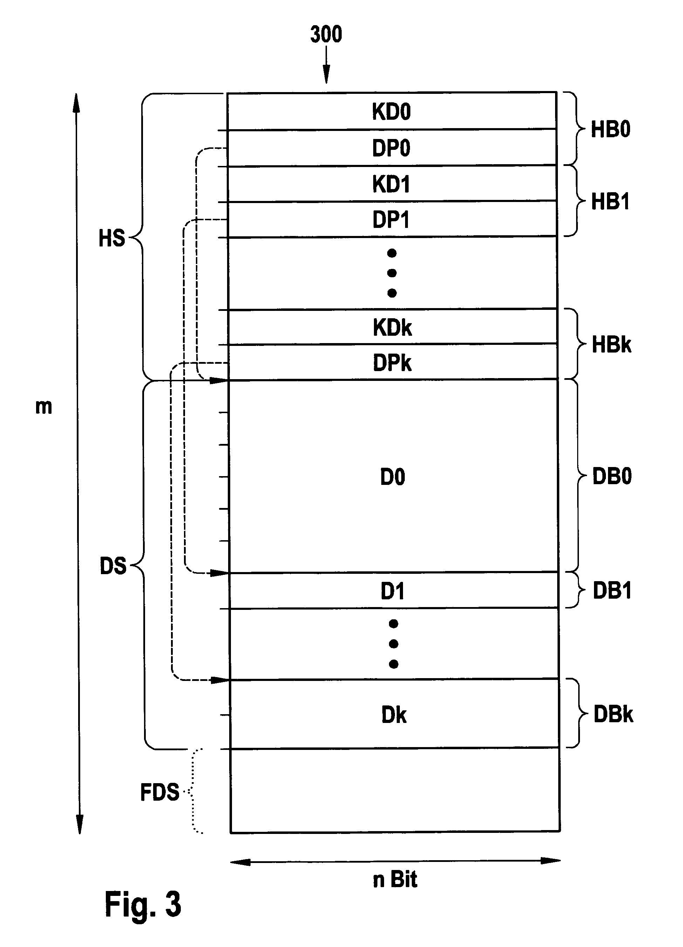

Die Anordnung 105 besteht aus einem Botschaftsverwalter 200 (Message Handler MHD) und dem Botschaftsspeicher 300 (Message RAM). Der Botschaftsverwalter 200 kontrolliert bzw. steuert den Datentransfer zwischen dem Eingabepufferspeicher 201 sowie Ausgabepufferspeicher 202 und dem Botschaftsspeicher 300. Gleichermaßen kontrolliert bzw. steuert er die Datenübertragung in der anderen Richtung über die dritte Anordnung 103. Der Botschaftsspeicher 300 ist vorzugsweise als ein single-ported RAM ausgeführt. Dieser RAM-Speicher speichert die Botschaften bzw. Botschaftsobjekte, also die eigentlichen Daten, zusammen mit Konfigurations- und Statusdaten. Die genaue Struktur des Botschaftsspeichers 300 ist in Figur 3 näher dargestellt. Jedes Botschaftsobjekt besteht aus einem Kopfsegment HS und einem Datensegment DS. Im Kopfbereich HS sind Identifikationsfeld sowie weitere Konfigurations- und Statusinformationen KD zusammen mit einem Zeiger DP auf den Beginn des Datenbereichs DB im Datensegment DS des Botschaftsspeichers 300 abgelegt.

Die dritte Anordnung 103 besteht aus den Blöcken 205 bis 208. Entsprechend den beiden Kanälen A (CH A) und B (CH B) der physikalischen Schicht (FlexRay Physical Layer) ist diese Anordnung 103 in zwei Datenpfade mit je zwei Datenrichtungen aufgeteilt. Dies wird durch die Verbindungen 213 und 214 deutlich, wo die beiden Datenrichtungen für den Kanal A, RxA für Empfangen und TxA für Senden, sowie für Kanal B, RxB und TxB dargestellt sind. Mit Verbindung 215 ist ein optionaler bidirektionaler Steuereingang bezeichnet. Die Anbindung der dritten Anordnung 103 erfolgt über einen ersten Pufferspeicher 205 für Kanal B und einen zweiten Pufferspeicher 206 für Kanal A. Diese beiden Pufferspeicher (Transient Buffer RAMs: RAM A und RAM B) dienen als Zwischenspeicher für die Datenübertragung von bzw. zu der ersten Anordnung 105. Entsprechend der beiden Kanäle A, B sind diese beiden Pufferspeicher 205 und 206 mit jeweils einem Schnittstellenbaustein 207 und 208 verbunden, welche die FlexRay-Protokoll-Controller oder Busprotokoll-Controller bestehend aus einem Sende-/Empfangs-Schieberegister und der FlexRay-Protokoll Finite-State-Maschine enthalten. Die beiden Pufferspeicher 205 und 206 dienen somit als Zwischenspeicher für die Datenübertragung zwischen den Schieberegistern der Schnittstellenbausteine oder FlexRay Protokoll Controller 207 und 208 und dem Botschaftsspeicher 300. Auch hier werden vorteilhafter Weise durch jeden Pufferspeicher 205 oder 206 die Datenfelder, also das Payload Segment oder Datensegment DS zweier FlexRay-Botschaften gespeichert.

Weiterhin dargestellt im Kommunikationsbaustein 100 ist mit 209 die globale Zeiteinheit (Global Time Unit GTU), welche für die Darstellung der Zeitraster im FlexRay, also den Mikrotick µT und den Makrotick MT, zuständig ist. Ebenso wird über die globale Zeiteinheit 209 die fehlertolerante Uhrensynchronisation der Zykluszähler (Cycle Counter) und die Kontrolle der zeitlichen Abläufe im statischen und dynamischen Segment des FlexRay geregelt. Die Teilnehmer 102 des Kommunikationssystems verfügen über eigene lokale Uhren, die auf die globale Zeit synchronisiert werden. Für die Uhrensynchronisation werden Synchronisationsnachrichten im statischen Teil des Kommunikationszyklus übertragen. Die Uhrensynchronisation erfolgt am Ende eines jeden Kommunikationszyklus während der sog. Network Idle Time (NTT). Mit Hilfe eines speziellen Algorithmus entsprechend der aktuellen FlexRay-Spezifikation werden die lokalen Uhrzeiten der Komponenten 102 so korrigiert, dass alle lokalen Uhren zu einer globalen Uhr synchron laufen.

Mit Block 210 ist die allgemeine Systemsteuerung (System Universal Control SUC) dargestellt, durch welche die Operationsmodi des FlexRay-Kommunikationscontrollers bzw. des Kommunikationsbausteins 100 kontrolliert und gesteuert werden. Dazu gehören der Wakeup, der Startup, die Reintegration bzw. Integration, Normaloperation (normal operation) und passive Operation (passive operation). Block 211 zeigt das Netzwerk und Fehlermanagement (Network and Error Management NEM), wie in der FlexRay-Protokollspezifikation v2.1 beschrieben. Block 212 schließlich zeigt die Unterbrechungssteuerung (Interrupt Control INT), welche die Status- und Fehlerunterbrechungsflaggen (Status and Error Interrupt Flags) verwaltet und die Unterbrechungsausgänge 219 zur Teilnehmer-CPU 102 kontrolliert bzw. steuert. Der Block 212 enthält außerdem einen absoluten und einen relativen Timer bzw. Zeitgeber zur Erzeugung der Zeitunterbrechungen oder Timer-Interrupts.

Für die Kommunikation in einem FlexRay-Netzwerk oder FlexRay-Kommunikationssystem können Botschaftsobjekte bzw. Botschaften in dem Message Buffer 300 mit bis zu 254 Datenbytes konfiguriert werden. Der Botschaftsspeicher 300 ist insbesondere ein Botschafts-RAM-Speicher (Message RAM), welcher z.B. bis zu maximal 64 Botschaftsobjekte speichern kann. Alle Funktionen, die die Behandlung bzw. Verwaltung der Botschaften selbst betreffen, sind in dem Botschaftsverwalter oder Message Handler 200 implementiert. Dies sind z.B. die Akzeptanzfilterung, Transfer der Botschaften zwischen den beiden FlexRay-Protokoll-Controller-Blöcken 207 und 208 und dem Botschaftsspeicher 300, also dem Message RAM, sowie die Kontrolle der Sendereihenfolge und das Bereitstellen von Konfigurationsdaten bzw. Statusdaten.

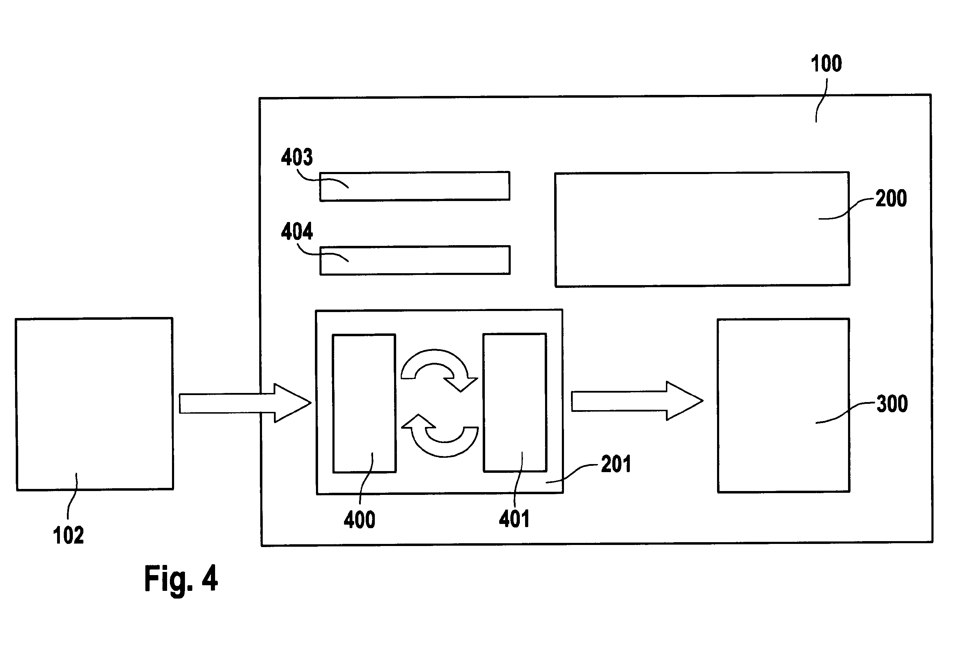

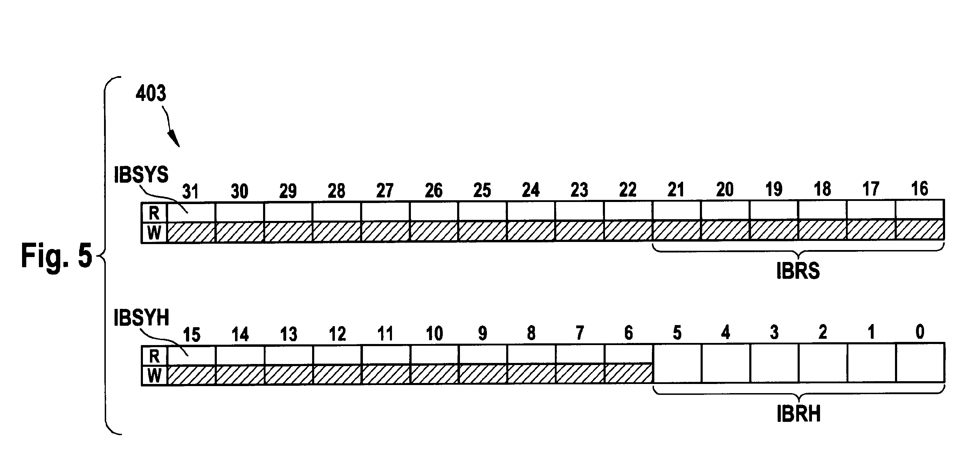

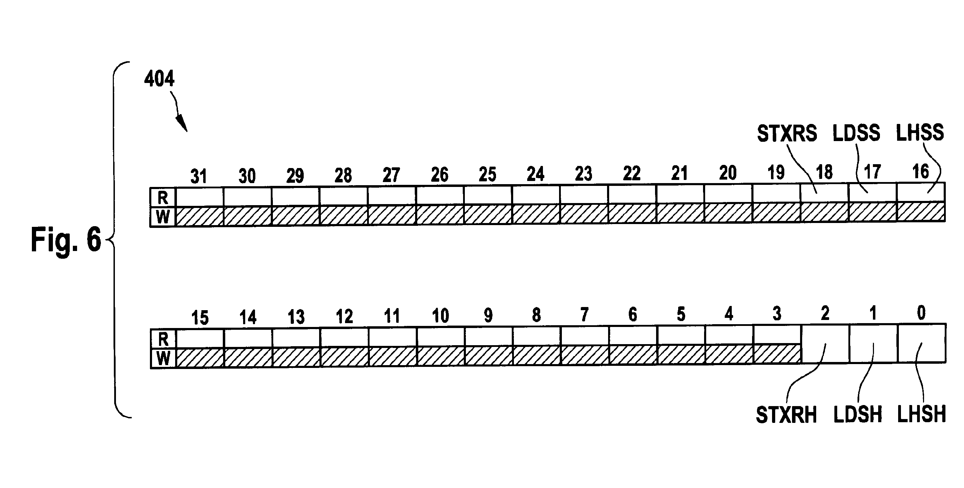

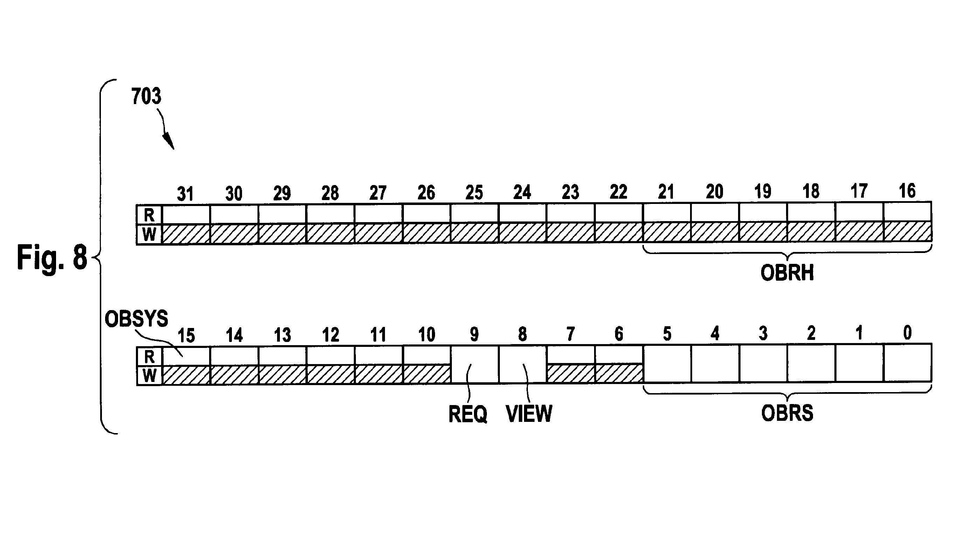

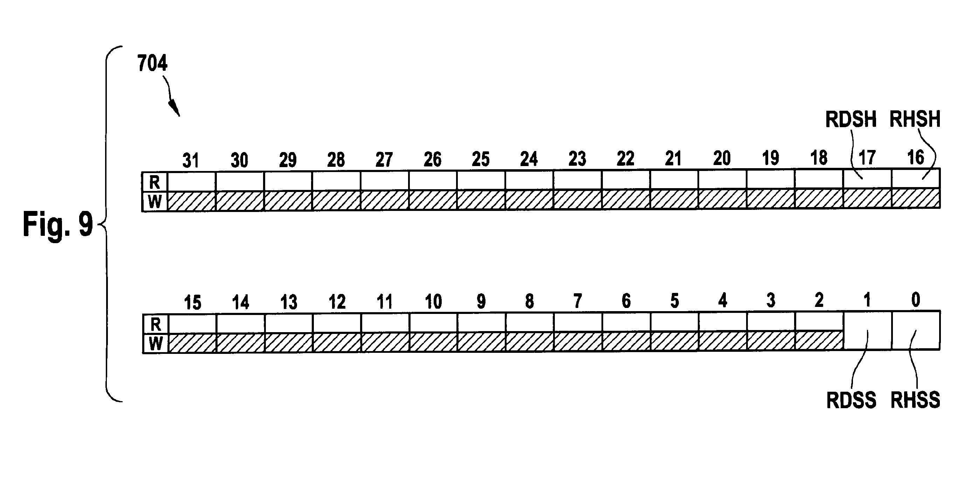

Eine externe CPU, also ein externer Prozessor der Teilnehmerprozessor oder Host 102 kann über die Teilnehmerschnittstelle, mit dem teilnehmerspezifischen Teil 204 direkt auf die Register des FlexRay-Kommunikationsbausteins zugreifen. Dabei wird eine Vielzahl von Registern verwendet. Diese Register werden eingesetzt, um die FlexRay Protokoll Controller, also die Schnittstellenbausteine 207 und 208, den Botschaftsverwalter (Message Handler MHD) 200, die globale Zeiteinheit (Global Time Unit GTU) 209, den allgemeinen Systemcontroller (System Universal Controller SUC) 210, die Netzwerk- und Fehlermanagementeinheit (Network- and Error-Management Unit NEM) 211, den Unterbrechungscontroller (Interrupt Controller INT) 212 sowie den Zugriff auf das Message RAM, also den Botschaftsspeicher 300, zu konfigurieren und zu steuern und ebenso den entsprechenden Status anzuzeigen. Zumindest auf Teile dieser Register wird noch in den Figuren 4 bis 6 und 7 bis 9 näher eingegangen. Ein solch beschriebener, erfindungsgemäßer FlexRay-Kommunikationsbaustein 100 ermöglicht die einfache Umsetzung der FlexRay-Spezifikation v2.1, wodurch einfach ein ASIC oder ein Mikrocontroller mit entsprechender FlexRay-Funktionalität generiert werden kann.

In Figur 3 ist detailliert die Aufteilung des Botschaftsspeichers 300 beschrieben. Für die nach der FlexRay-Protokollspezifikation geforderte Funktionalität eines FlexRay-Kommunikationscontrollers wird ein Botschaftsspeicher 300 für das Bereitstellen von zu sendenden Botschaften (Transmit Buffer) sowie das Abspeichern von fehlerfrei empfangenen Botschaften (Receive Buffer) benötigt. Das FlexRay-Protokoll erlaubt Botschaften mit einem Datenbereich, also einem Payload-Bereich von 0 bis 254 Bytes. Wie in Figur 2 dargestellt, ist der Botschaftsspeicher 300 Teil des FlexRay-Kommunikationsbausteins 100. Das nachfolgend beschriebene Verfahren sowie der entsprechende Botschaftsspeicher 300 beschreiben die Speicherung von zu sendenden Botschaften sowie von empfangenen Botschaften, insbesondere unter Verwendung eines Random Access Memory (RAM), wobei es durch den erfindungsgemäßen Mechanismus möglich ist in einem Botschaftsspeicher 300 vorgegebener Größe eine variable Anzahl von Botschaften zu speichern. Dabei ist die Anzahl der speicherbaren Botschaften abhängig von der Größe der Datenbereiche der einzelnen Botschaften, wodurch zum einen die Größe des benötigten Speichers 300 minimiert werden kann ohne die Größe der Datenbereiche der Botschaften einzuschränken und zum anderen eine optimale Ausnutzung des Speichers 300 erfolgt. Im Folgenden nun soll diese variable Aufteilung eines insbesondere RAMbasierten Botschaftsspeichers 300 für einen FlexRay- Communication Controller näher beschrieben werden.

Zur Implementierung wird nun beispielhaft ein Botschaftsspeicher 300 mit einer festgelegten Wortbreite von n Bit, beispielsweise 8, 16, 32 usw., sowie einer vorgegebenen Speichertiefe von m Worten vorgegeben (m, n als natürliche Zahlen). Dabei wird der Botschaftsspeicher 300 in zwei Segmente aufgeteilt, ein Header Segment HS (Kopfsegment) und ein Datensegment DS (Payload Section, Payload Segment). Pro Botschaft wird ein Headerbereich HB und ein Datenbereich DB angelegt. Für Botschaften 0, 1 bis k (k als natürliche Zahl) werden somit Headerbereiche oder Kopfbereiche HB0 HB1 bis HBk und Datenbereiche DB0, DB1 bis DBk angelegt. In einer Botschaft wird also zwischen ersten und zweiten Daten unterschieden, wobei die ersten Daten Konfigurationsdaten und/oder Statusdaten bezüglich der FlexRay-Botschaft entsprechen und jeweils in einem Headerbereich HB (HB0**,** HB1, ..., HBk) abgelegt werden. Die zweiten Daten, die den eigentlichen Daten entsprechen, die übertragen werden sollen, (sog. Nutzdaten) werden entsprechend in Datenbereichen DB (DB0 DB 1, ... , DBk) abgelegt. Somit entsteht für die ersten Daten pro Botschaft ein erster Datenumfang (in Bit, Byte oder Speicherworten gemessen) und für die zweiten Daten einer Botschaft ein zweiter Datenumfang (ebenfalls in Bit, Byte oder Speicherworten gemessen), wobei der zweite Datenumfang pro Botschaft unterschiedlich sein kann. Die Aufteilung zwischen Kopfsegment HS und Datensegment DS im Botschaftsspeicher 300 ist variabel, d. h. es existiert keine vorgegebene Grenze zwischen den beiden Bereichen HS, DS. Die Aufteilung zwischen Kopfsegment HS und Datensegment DS ist erfindungsgemäß abhängig von der Anzahl k der Botschaften sowie dem zweiten Datenumfang, also dem Umfang der eigentlichen Nutzdaten, einer Botschaft bzw. aller k Botschaften zusammen.

Erfindungsgemäß wird nun den Konfigurationsdaten KD0 KD1 bis KDk der jeweiligen Botschaft ein Zeigerelement oder Datapointer DP0**,** DP1 bis DPk jeweils direkt zugeordnet. In der speziellen Ausgestaltung wird jedem Kopfbereich HB0, HB1 bis HBk eine feste Anzahl von Speicherworten, hier zwei, zugeordnet, so dass immer ein Konfigurationsdatum KD (KD0, KD1, ..., KDk) und ein Zeigerelement DP (DP0, DP1, ..., DPk) zusammen in einem Headerbereich HB (HB0, HB1, ..., HBk) abgelegt sind. An diesem Kopfsegment HS mit den Headerbereichen HB, dessen Größe bzw. erster Datenumfang abhängig von der Anzahl k der zu speichernden Botschaften ist, schließt das Datensegment DS zur Speicherung der eigentlichen Botschaftsdaten D0, D1 bis Dk an. Dieses Datensegment (oder die Datasection) DS hängt in seinem Datenumfang vom jeweiligen Datenumfang der abgelegten Botschaftsdaten (Nutzdaten) ab, hier z.B. in DB0 sechs Worte, in DB1 ein Wort und in DBk zwei Worte. Die jeweiligen Zeigerelemente DP0, DP1 bis DPk zeigen somit immer zum Beginn, also auf die Anfangsadresse, des jeweiligen Datenbereichs DB0, DB1 bis DBk, in denen die Daten D0, D1 bis Dk der jeweiligen Botschaften 0, 1, bis k abgelegt sind. Damit ist die Aufteilung des Botschaftsspeichers 300 zwischen Kopfsegment HS und Datensegment DS variabel und hängt von der Anzahl der Botschaften selbst sowie dem jeweiligen Datenumfang einer Botschaft und damit dem gesamten zweiten Datenumfang ab. Werden weniger Botschaften konfiguriert, wird das Kopfsegment HS kleiner und der frei werdende Bereich im Botschaftsspeicher 300 kann als Zusatz zum Datensegment DS für die Speicherung von Daten verwendet werden. Durch diese Variabilität kann eine optimale Speicherausnutzung gewährleistet werden, womit auch die Verwendung kleinerer Speicher 300 möglich ist. Das freie Datensegment FDS, insbesondere dessen Größe, ebenfalls abhängig von der Kombination aus Anzahl k der gespeicherten Botschaften und dem jeweiligen zweiten Datenumfang der Botschaften ist somit minimal und kann sogar 0 werden.

Damit sind gegenüber einer festgelegten Aufteilung des Botschaftsspeichers 300 folgende Vorteile gegeben: Der Anwender kann bei der Programmierung entscheiden, ob er eine größere Anzahl von Botschaften mit kleinem Datenfeld oder ob er eine kleinere Anzahl von Botschaften mit großem Datenfeld verwenden möchte. Bei der Konfiguration von Botschaften mit unterschiedlich großem Datenbereich DB wird der vorhandene Speicherplatz optimal ausgenutzt. Der Anwender hat die Möglichkeit einen Datenspeicherbereich gemeinsam für unterschiedliche Botschaften zu nutzen.

Neben der Verwendung von Zeigerelementen (DP0, DP1, ..., DPk) ist es auch möglich, die ersten und zweiten Daten, also die Konfigurationsdaten KD (KD0 KD1,..., KDk) und die eigentlichen Daten D (D= D0, ..., Dk) in einer vorgebbaren Reihenfolge abzulegen, so dass die Reihenfolge der Kopfbereiche HB0 bis HBk im Kopfsegment HS und die Reihenfolge der Datenbereiche DB0 bis DBk im Datensegment DS jeweils identisch ist. Dann könnte unter Umständen sogar auf ein Zeigerelement verzichtet werden. Allerdings müssten für diesen Fall Informationen über die Länge der einzelnen Datenbereiche DB0 bis DBk zugänglich sein, oder aber die Datenbereiche DB0 bis DBk sind alle gleich groß.

In einer besonderen Ausgestaltung ist dem Botschaftsspeicher 300 ein Fehlerkennungserzeuger, insbesondere ein Parity-Bit-Generator-Element, und ein Fehlerkennungsprüfer, insbesondere ein Parity-Bit-Prüf-Element, zugeordnet, um die Korrektheit der gespeicherten Daten in dem Kopfsegment HS und dem Datensegment DS zu gewährleisten, indem pro Speicherwort oder pro Bereich (Kopfbereich HB und/oder Datenbereich DB) eine Prüfsumme (Checksumme) eben insbesondere als Parity-Bit mit abgelegt werden kann. Andere Kontrollkennungen, z.B. ein CRC (Cyclic redundancy check) oder auch Kennungen höherer Mächtigkeit wie ECC (Error Code Correction) sind denkbar.

Bei der Implementierung des FlexRay-Communication Controllers auf einer integrierten Schaltung kann die Größe des Botschaftsspeichers 300 durch Anpassung der Speichertiefe des verwendeten Speichers an die Bedürfnisse der Applikation angepasst werden, ohne die sonstigen Funktionen des Communication Controllers zu ändern.

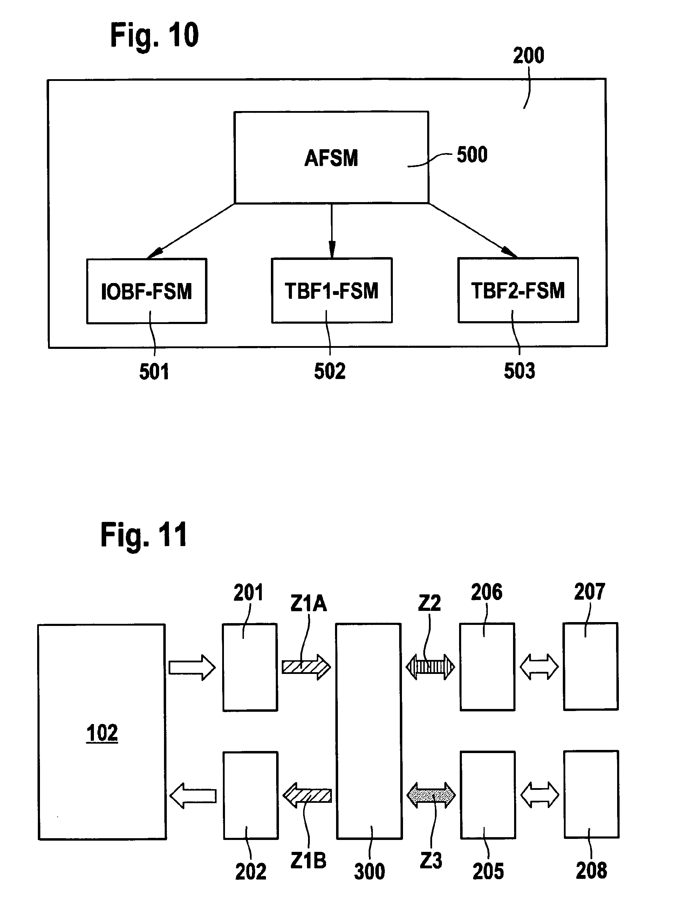

Im Weiteren wird nun anhand der Figuren 4 bis 6 sowie 7 bis 9 der Host-CPU-Zugriff, also Schreiben und Lesen von Konfigurationsdaten bzw. Statusdaten und der eigentlichen Nutzdaten über die Pufferspeicheranordnung 201 und 202 näher beschrieben. Dabei ist es das Ziel, eine Entkopplung bezüglich der Datenübertragung derart herzustellen, dass die Datenintegrität sichergestellt werden kann und gleichseitig eine hohe Übertragungsgeschwindigkeit gewährleistet ist. Die Steuerung dieser Vorgänge erfolgt über den Botschaftsverwalter 200, was später noch näher in den Figuren 10, 11 und 12 beschrieben wird.

In den Figuren 4, 5 und 6 werden zunächst die Schreibzugriffe auf den Botschaftsspeicher 300 durch die Host-CPU oder Teilnehmer-CPU 102 über den Eingangspufferspeicher 201 näher erläutert. Dazu zeigt Figur 4 noch einmal den Kommunikationsbaustein 100, wobei aus Gründen der Übersichtlichkeit nur die hier relevanten Teile des Kommunikationsbausteins 100 gezeigt sind. Dies ist zum einen der für die Steuerung der Abläufe verantwortliche Botschaftsverwalter 200 sowie zwei Kontrollregister 403 und 404, die wie dargestellt außerhalb des Botschaftsverwalters 200 im Kommunikationsbaustein 100 untergebracht sein können, aber auch im Botschaftsverwalter 200 selbst enthalten sein können. Das Bezugszeichen 403 stellt dabei das Eingangs-Anforderungsregister (Input Buffer Command Request Register) dar und 404 das Eingangs-Maskierungsregister (Input Buffer Command Mask Register). Schreibzugriffe der Host-CPU 102 auf den Botschaftsspeicher 300 (Message RAM) erfolgen also über den zwischengeschalteten Eingangspufferspeicher 201 (Input Buffer). Dieser Eingangspufferspeicher 201 ist nun geteilt bzw. zweifach ausgelegt, und zwar als Teilpufferspeicher 400 und einem zu dem Teilpufferspeicher 400 zugehörigen Schattenspeicher 401. Damit kann wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung gewährleistet werden. Die Steuerung der Zugriffe erfolgt über das Eingangs-Anforderungsregister 403 und über das Eingangs-Maskierungsregister 404. Im Register 403 sind mit den Zahlen von 0 bis 31 die jeweiligen Bitstellen im Register 403, hier beispielhaft für eine Breite von 32 Bit, bezeichnet. Gleiches gilt für das Register 404 und die Bitstellen 0 bis 31 im Register 404.

Erfindungsgemäß erhalten nun beispielhaft die Bitstellen 0 bis 5, 15, 16 bis 21 und 31 des Registers 403 bezüglich der Ablaufsteuerung eine besondere Funktion. So ist in die Bitstellen 0 bis 5 des Registers 403 eine Kennung IBRH (Input Buffer Request Host) als Botschaftskennung eintragbar. Ebenso ist in die Bitstellen 16 bis 21 des Registers 403 eine Kennung IBRS (Input Buffer Request Shadow) eintragbar. Ebenso sind in Registerstelle 15 von Register 403 IBSYH und in Registerstelle 31 von Register 403 IBSYS als Zugriffskennungen eingetragen. Ausgezeichnet sind auch die Stellen 0 bis 2 des Registers 404, wobei in 0 und 1 mit LHSH (Load Header Section Host) und LDSH (Load Data Section Host) weitere Kennungen als Datenkennungen eingetragen sind. Diese Datenkennungen sind hier in einfachster Form, nämlich jeweils als ein Bit ausgebildet. In Bitstelle "2" von Register 404 ist mit STXRH (Set Transmission Request Host) eine Startkennung eingeschrieben.

Im Weiteren wird nun der Ablauf des Schreibzugriffs auf den Botschaftsspeicher 300 über den Eingangspuffer 201 beschrieben.

Die Host-CPU 102 schreibt die Daten der zu transferierenden Botschaft in den Eingangspufferspeicher 201. Dabei kann die Host-CPU 102 nur die Konfigurations- und Headerdaten KD einer Botschaft für das Headersegment HS des Botschaftsspeichers 300 oder nur die eigentlichen, zu übertragenden Nutzdaten D einer Botschaft für das Datensegment DS des Botschaftsspeichers 300 oder beide Daten KD, D schreiben. Welcher Teil einer Botschaft also Konfigurationsdaten KD und/oder die eigentlichen Daten D übertragen werden soll, wird durch die speziellen Datenkennungen LHSH und LDSH im Eingangs-Markierungsregister 404 festgelegt. Dabei wird durch LHSH (Load Header Section Host) festgelegt, ob die Headerdaten, also die Konfigurationsdaten KD, und durch LHSH (Load Data Section Host) festgelegt, ob die Daten D übertragen werden sollen.

Dadurch, dass der Eingangspufferspeicher 201 zweiteilig mit einem Teil des Pufferspeichers 400 und einem dazugehörigen Schattenspeicher 401 ausgebildet ist und ein wechselseitiger Zugriff erfolgen soll, sind als Gegenstück zu LHSH und LDSH zwei weitere Datenkennungsbereiche vorgesehen, die nun auf den Schattenspeicher 401 bezogen sind. Diese Datenkennungen in den Bitstellen 16 und 17 des Registers 404 sind mit LHSS (Load Header Section Shadow) und LDSS (Load Data Section Shadow) bezeichnet. Durch diese wird somit der Übertragungsvorgang bezüglich des Schattenspeichers 401 gesteuert.

Ist nun das Startbit bzw. die Startkennung STXRH (Set Transmission Request Host) in Bitstelle "2" des Eingangs-Maskierungsregisters 404 gesetzt, so wird nach erfolgtem Transfer der jeweils zu übertragenden Konfigurationsdaten KD und/oder eigentlichen Daten D in den Botschaftsspeicher 300 automatisch eine Sendeanforderung (Transmission Request) für das entsprechende Botschaftsobjekt gesetzt. D. h. durch diese Startkennung STXRH wird das automatische Senden eines übertragenden Botschaftsobjekts gesteuert, insbesondere gestartet.

Das Gegenstück hierzu entsprechend für den Schattenspeicher 401 ist die Startkennung STXRS (Set Transmission Request Shadow), welche beispielhaft in Bitstelle "18" des Eingangs-Markierungsregisters 404 enthalten ist und auch hier im einfachsten Fall als ein Bit ausgebildet ist. Die Funktion von STXRS ist analog der Funktion von STXRH, lediglich bezogen auf den Schattenspeicher 401.

Wenn die Host-CPU 102 die Botschaftskennung, insbesondere die Position bzw. Nummer des Botschaftsobjekts im Botschaftsspeicher 300, in welches die Daten des Eingangspufferspeichers 201 transferiert werden sollen, in die Bitstellen 0 bis 5 des Eingangs-Anforderungsregisters 403, also nach IBRH, schreibt, werden der Teilpufferspeicher 400 des Eingangspufferspeichers 201 und der zugehörige Schattenspeicher 401 vertauscht bzw. es wird der jeweilige Zugriff von Host-CPU 102 und Botschaftsspeicher 300 auf die beiden Teilspeicher 400 und 401 vertauscht, wie durch die halbkreisförmigen Pfeile zwischen den beiden Speichern 400, 401 angedeutet. Dabei wird z.B. auch der Datentransfer, also die Datenübertragung zum Botschaftsspeicher 300 gestartet. Die Datenübertragung zum Botschaftsspeicher 300 selbst erfolgt aus dem Schattenspeicher 401. Gleichzeitig werden die Registerbereiche IBRH und IBRS getauscht. Ebenso getauscht werden LHSH und LDSH gegen LHSS und LDSS. Gleichermaßen getauscht wird STXRH mit STXRS.

IBRS zeigt somit die Kennung der Botschaft, also die Nummer des Botschaftsobjektes, für das eine Übertragung, also ein Transfer aus dem Schattenspeicher 401 im Gange ist bzw. welches Botschaftsobjekt, also welcher Bereich im Botschaftsspeicher als letztes Daten ( Konfigurationsdaten KD und/oder Nutzdaten D) aus dem Schattenspeicher 401 erhalten hat. Durch die Kennung (hier wieder beispielsweise 1 Bit) IBSYS (Input Buffer Busy Shadow) in Bitstelle "31" des Eingangs-Anforderungsregisters 403 wird angezeigt, ob gerade eine Übertragung mit Beteiligung des Schattenspeichers 401 erfolgt. So wird beispielsweise bei IBSYS=1 gerade aus dem Schattenspeicher 401 übertragen und bei IBSYS eben nicht. Dieses Bit IBSYS wird beispielsweise durch das Schreiben von IBRH, also Bitstellen "0" bis "5", in Register 403 gesetzt um anzuzeigen, dass ein Transfer zwischen dem Schattenspeicher 401 und dem Botschaftsspeicher 300 im Gange ist. Nach Beendigung dieser Datenübertragung zum Botschaftsspeicher 300 wird IBSYS wieder zurückgesetzt.

Während der Datentransfer aus dem Schattenspeicher 401 gerade läuft, kann die Host-CPU 102 die nächste zu transferierende Botschaft in den Eingangspufferspeicher 201 bzw. in den Teilpufferspeicher 400 schreiben. Mit Hilfe einer weiteren Zugriffskennung IBSYH (Input Buffer Busy Host) beispielsweise in Bitstelle "15" von Register 403, kann die Kennung noch weiter verfeinert werden. Schreibt die Host-CPU 102 gerade IBRH, also die Bitstellen "0" bis "5" von Register 403 während eine Übertragung zwischen dem Schattenspeicher 401 und dem Botschaftsspeicher 300 läuft, also IBSYS=1 ist, so wird IBSYH im Eingangs-Anforderungsregister 403 gesetzt. Sobald der laufende Transfer (Übertragung) abgeschlossen ist, wird der angeforderte Transfer (Anforderung durch STXRH siehe oben) gestartet und das Bit IBSYH zurückgesetzt. Das Bit IBSYS bleibt während der ganzen Zeit gesetzt um anzuzeigen, dass Daten zum Botschaftsspeicher 300 transferiert werden. Alle verwendeten Bits aller Ausführungsbeispiele können dabei auch als Kennungen mit mehr als einem Bit ausgebildet sein. Vorteilhaft ist die 1-Bit Lösung aus Speicher- und verarbeitungsökonomischen Gründen. Die mehr-Bit Lösung wäre aus Sicherheits- und Zuverlässigkeitsgründen empfehlenswert.

Der so beschriebene Mechanismus erlaubt es der Host-CPU 102 kontinuierlich Daten in die im Botschaftsspeicher 300 befindlichen Botschaftsobjekte bestehend aus Headerbereich HB und Datenbereich DB zu transferieren, vorrausgesetzt die Zugriffsgeschwindigkeit der Host-CPU 102 auf den Eingangspufferspeicher 201 ist kleiner oder gleich der internen Datentransferrate des Kommunikationsbausteins 100 (also des FlexRay-IP-Moduls).

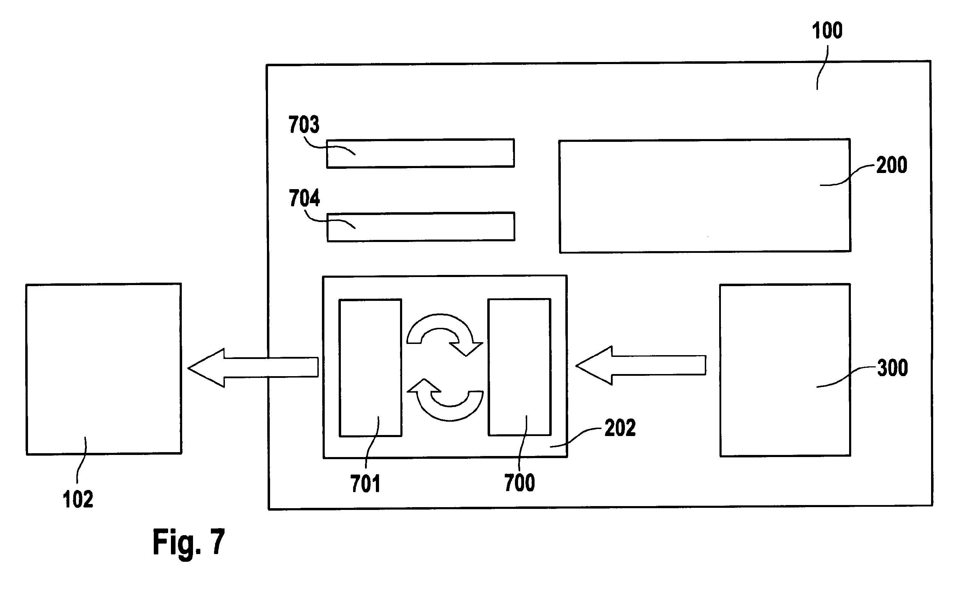

In den Figuren 7, 8 und 9 werden nun die Lesezugriffe auf den Botschaftsspeicher 300 durch die Host-CPU oder Teilnehmer-CPU 102 über den Ausgangspufferspeicher oder Ausgabepufferspeicher 202 näher erläutert. Dazu zeigt Figur 7 noch einmal den Kommunikationsbaustein 100, wobei aus Gründen der Übersichtlichkeit auch hier nur die relevanten Teile des Kommunikationsbausteins 100 gezeigt sind. Dies ist zum einen der für die Steuerung der Abläufe verantwortliche Botschaftsverwalter 200 sowie zwei Kontrollregister 703 und 704, die wie dargestellt außerhalb des Botschaftsverwalter 300 im Kommunikationsbaustein 100 untergebracht sein können, aber auch im Botschaftsverwalter 200 selbst enthalten sein können. Bezugszeichen 703 stellt dabei das Ausgangs-Anforderungsregister (Output Buffer Command Request Register) dar und Bezugszeichen 704 das Ausgangs-Maskierungsregister (Output Buffer Command Mask Register). Lesezugriffe der Host-CPU 102 auf den Botschaftsspeicher 300 erfolgen also über den zwischengeschalteten Ausgangspufferspeicher 202 (Output Buffer). Dieser Ausgangspufferspeicher 202 ist nun ebenfalls geteilt bzw. zweifach ausgelegt, und zwar als Teilpufferspeicher 701 und einem zu dem Teilpufferspeicher 701 zugehörigen Schattenspeicher 700. Damit kann auch hier wie nachfolgend beschrieben ein kontinuierlicher Zugriff der Host-CPU 102 auf die abgelegten Botschaften bzw. Botschaftsobjekte respektive Daten des Botschaftsspeichers 300 erfolgen und damit Datenintegrität und beschleunigte Übertragung nun in der Gegenrichtung vom Botschaftsspeicher 300 zur Host-CPU 102 gewährleistet werden. Die Steuerung der Zugriffe erfolgt über das Ausgangs-Anforderungsregister 703 und über das Eingangs-Maskierungsregister 704. Auch im Register 703 sind mit den Zahlen von 0 bis 31 die jeweiligen Bitstellen in 703 hier beispielhaft für eine Breite von 32 Bit dargestellt. Gleiches gilt für das Register 704 und die Bitstellen 0 bis 31 im Register 704.

Die Bitstellen "0" bis "5", "8" und "9", "15" und "16" bis "21" des Registers 703 erhalten nun beispielhaft bezüglich der Ablaufsteuerung des Lesezugriffs eine besondere Funktion. So ist in die Bitstellen "0" bis "5" des Registers 703 eine Kennung OBRS (Output Buffer Request Shadow) als Botschaftskennung eintragbar. Ebenso ist in die Bitstellen "16" bis "21" des Registers 703 eine Kennung OBRH (Output Buffer Request Host) eintragbar. Als Zugriffskennung ist in Bitstelle "15" von Register 703 eine Kennung OBSYS (Output Buffer Busy Shadow) eintragbar. Ausgezeichnet sind auch die Stellen "0" und "1" des Ausgabe-Maskierungsregisters 704, wobei in den Bitstellen "0" und "1" mit RDSS (Read Data Section Shadow) und RHSS (Read Header Section Shadow) weitere Kennungen als Datenkennungen eingetragen sind Weitere Datenkennungen sind beispielsweise in den Bitstellen "16" und "17" mit RDSH (Read Data Section Host) und RHSH (Read Header Section Host) vorgesehen. Diese Datenkennungen sind auch hier beispielhaft in einfachster Form, nämlich jeweils als ein Bit, ausgebildet. In Bitstelle "9" des Registers 703 ist eine Startkennung REQ eingetragen. Weiterhin ist eine Umschaltkennung VIEW vorgesehen die beispielhaft in Bitstelle "8" von Register 703 eingetragen ist.

Die Host-CPU 102 fordert die Daten eines Botschaftsobjekts aus dem Botschaftsspeicher 300 an, indem sie die Kennung der gewünschten Botschaft, also insbesondere die Position bzw. Nummer des gewünschten Botschaftsobjektes, nach OBRS also in die Bitstellen 0 bis 5 des Registers 703 schreibt. Auch hierbei kann die Host-CPU wie in der Gegenrichtung entweder nur die Status- bzw. Konfigurations- und Headerdaten KD einer Botschaft also aus einem Headerbereich HB oder nur die eigentlich zu übertragenden Nutzdaten D einer Botschaft also aus dem Datenbereich DB oder auch beide Daten KK, D lesen. Welcher Teil der Daten also aus Headerbereich HB und/oder Datenbereich DB übertragen werden soll wird hierbei vergleichbar mit der Gegenrichtung durch RHSS und RDSS festgelegt. Das heißt RHSS gibt an, ob die Headerdaten KD gelesen werden sollen, und RDSS gibt an, ob die eigentlichen Daten D gelesen werden sollen.

Eine Startkennung dient dazu, die Übertragung vom Botschaftsspeicher 300 zum Schattenspeicher 700 zu starten. D.h., wird als Kennung wie im einfachsten Fall ein Bit verwendet, wird durch Setzen von Bit REQ in Bitstelle "9" im Ausgabe-Anforderungsregister 703 die Übertragung vom Botschaftsspeicher 300 zum Schattenspeicher 700 gestartet. Die laufende Übertragung wird wieder durch eine Zugriffskennung, hier wieder im einfachsten Fall durch ein Bit OBSYS, im Register 703 angezeigt. Um Kollisionen zu vermeiden, ist es vorteilhaft, wenn das Bit REQ nur dann gesetzt werden kann, wenn OBSYS nicht gesetzt ist, also gerade keine laufende Übertragung erfolgt. Hier erfolgt dann auch der Botschaftstransfer zwischen dem Botschaftsspeicher 300 und dem Schattenspeicher 700. Der eigentliche Ablauf könnte nun einerseits vergleichbar zur Gegenrichtung wie unter den Figuren 4, 5 und 6 beschrieben gesteuert werden (komplementäre Registerbelegung) und erfolgen, oder aber in einer Variation durch eine zusätzliche Kennung, nämlich eine Umschaltkennung VIEW in Bitstelle "8" des Registers 703. D.h., nach Abschluss der Übertragung wird das Bit OBSYS zurückgesetzt, und durch Setzen des Bits VIEW im Ausgabe-Anforderungsregister 703 werden der Teilpufferspeicher 701 und der zugehörige Schatienspeicher 700 getauscht bzw. es werden die Zugriffe darauf getauscht und die Host-CPU 102 kann nun das vom Botschaftsspeicher 300 angeforderte Botschaftsobjekt, also die entsprechende Botschaft, aus dem Teilpufferspeicher 701 auslesen. Dabei werden auch hier vergleichbar mit der Gegenübertragungsrichtung in den Figuren 4 bist 6 die Registerzellen OBRS und OBRH getauscht. Gleichermaßen werden RHSS und RDSS gegen RHSH und RDSH getauscht. Als Schutzmechanismus kann auch hier vorgesehen werden, dass das Bit VIEW nur dann gesetzt werden kann, wenn OBSYS nicht gesetzt ist, also keine laufende Übertragung stattfindet.

Somit erfolgen Lesezugriffe der Host-CPU 102 auf den Botschaftsspeicher 300 über einen zwischengeschalteten Ausgangspufferspeicher 202. Dieser Ausgangspufferspeicher 202 ist ebenso wie der Eingangspufferspeicher 201 doppelt bzw. zweifach ausgelegt um einen kontinuierlichen Zugriff der Host-CPU 102 auf die Botschaftsobjekte, die im Botschaftsspeicher 300 abgelegt sind, zu gewährleisten. Auch hier werden die Vorteile der hohen Datenintegrität und der beschleunigten Übertragung erzielt.

Durch die Verwendung der beschriebenen Eingangs- und Ausgangspuffer 201, 202 wird sichergestellt, dass eine Host-CPU 102 trotz der modul internen Latenzzeiten unterbrechungsfrei auf den Botschaftsspeicher 300 zugreifen kann.

Zur Sicherstellung dieser Datenintegrität wird die Datenübertragung, insbesondere die Weiterleitung im Kommunikationsbaustein 100, durch den Botschaftsverwalter 200 (Message Handler MHD) vorgenommen. Dazu ist in Figur 10 der Botschaflsverwalter 200 im Detail dargestellt. Der Botschaftsverwalter 200 ist in seiner Funktionalität durch mehrere Zustandsmaschinen oder Zustandsautomaten, also endliche Automaten, sogenannte Finite-State-Maschinen (FSM), darstellbar. Dabei sind wenigstens drei Zustandsmaschinen und in einer besonderen Ausführungsform vier Finite-State-Maschinen vorgesehen. Eine erste Finite-State-Maschine ist die IOBF-FSM (Input/Output Buffer FSM), die mit 501 bezeichnet ist. Diese Zustandsmaschine IOBF-FSM könnte auch je Übertragungsrichtung bezüglich des Eingangspufferspeichers 201 oder des Ausgangspufferspeichers 202 in zwei Finite-State-Maschinen aufgeteilt sein, bspw. IBF-FSM (Input Buffer FSM) und OBF-FSM (Output Buffer FSM), womit maximal fünf Zustandsautomaten (IBF-FSM, OBF-FSM, TBF1-FSM, TBF2-FSM, und AFSM) denkbar wären. Bevorzugt ist aber eine gemeinsame IOBF-FSM vorzusehen.

Wenigstens eine zweite Finite-State-Maschine TBF-FSM ist hier im Zuge des bevorzugten Ausführungsbeispiels in zwei Blöcke 502 und 503 aufgeteilt und bedient die beiden Kanäle A und B bezüglich der Speicher 205 und 206, wie zu Fig. 2 beschrieben. Dabei kann eine Finite-State-Maschine vorgesehen sein, um beide Kanäle A und B zu bedienen, oder aber - wie in der bevorzugten Ausführungsform - eine erste mit 502 bezeichnete Finite-State-Maschine TBF1-FSM (Transient Buffer 1 (206, RAM A) FSM) für Kanal A und für Kanal B eine zweite mit 503 bezeichnete Zustandsmaschine TBF2-FSM (Transient Buffer 2 (205, RAM B) FSM) vorgesehen sein.

Zur Steuerung des Zugriffs der drei Finite-State-Maschinen 501-503 im bevorzugten Ausführungsbeispiel dient eine Arbiter-Finite-State-Maschine, die sogenannte AFSM, die mit 500 bezeichnet ist. Die Daten (Headerdaten KD und/oder Nutzdaten D) werden in einem durch ein Taktmittel, wie z.B. einen VCO (Voltage Controlled Oszillator), einen Schwingquarz usw. generierten oder aus diesem angepassten oder hergeleiteten Takt im Kommunikationsbaustein 100 übertragen. Der Takt T kann dabei im Baustein 100 generiert werden oder von außen, z.B. als Bustakt, vorgegeben sein. Die Arbiter-Finite-State-Maschine AFSM 500 gibt abwechselnd einer der drei Finit-State-Maschinen 501-503, insbesondere jeweils für eine Taktperiode T, Zugriff auf den Botschaftsspeicher 300. D.h., die zur Verfügung stehende Zeit wird entsprechend den Zugriffsanforderungen der einzelnen Zustandsautomaten 501, 502, 503 auf diese anfordernden Zustandsautomaten 501-503 aufgeteilt. Erfolgt eine Zugriffsanforderung von nur einer Finite-State-Maschine, so erhält diese 100% der Zugriffszeit, bis auf weiteres also alle Takte T. Erfolgt eine Zugriffsanforderung von zwei Zustandsautomaten, erhält jede Finite-State-Maschine 50% der Zugriffszeit. Erfolgt schließlich eine Zugriffsanforderung von drei Zustandsautomaten so erhält jede der Finite-State-Maschinen 1/3 der Zugriffszeit. Dadurch wird die jeweils zur Verfügung stehende Bandbreite optimal genutzt.

Die erste Finite-State-Maschine 501, also IOBF-FSM, führt bei Bedarf folgende Aktionen aus:
- Datentransfer vom Eingangspufferspeicher 201 zum ausgewählten Botschaftsobjekt im Botschaftsspeicher 300.
- Datentransfer vom ausgewählten Botschaftsobjekt im Botschaftsspeicher 300 zum Ausgangspufferspeicher 202.

Die Zustandsmaschine 502 für Kanal A, also TBF1-FSM, führt folgende Aktionen aus:
- Datentransfer vom ausgewählten Botschaftsobjekt im Botschaftsspeicher 300 zum Pufferspeicher 206 von Kanal A.
- Datentransfer vom Pufferspeicher 206 zum ausgewählten Botschaftsobjekt im Botschaftsspeicher 300.
- Suche nach dem passenden Botschaftsobjekt im Botschaftsspeicher 300, wobei bei Empfang das Botschaftsobjekt (Receive Buffer 202) zum Abspeichern einer auf Kanal A empfangenen Botschaft im Rahmen einer Akzeptanzfilterung gesucht wird und beim Senden das nächste auf Kanal A zu sendende Botschaftsobjekt (Transmit Buffer 201) gesucht wird.

Analog dazu ist die Aktion der Zustandsmaschine TBF2-FSM, also der Finite-State-Maschine für Kanal B in Block 503. Diese führt den Datentransfer vom ausgewählten Botschaftsobjekt im Botschaftsspeicher 300 zum Pufferspeicher 205 von Kanal B und den Datentransfer vom Pufferspeicher 205 zum ausgewählten Botschaftsobjekt im Botschaftsspeicher 300 aus. Auch die Suchfunktion ist analog zu der Zustandsmaschine TBF I-FSM nach einem passenden Botschaftsobjekt im Botschaftsspeicher 300, wobei bei Empfang das Botschaftsobjekt (Receive Buffer 202) zum Abspeichern einer auf Kanal B empfangenen Botschaft im Rahmen einer Akzeptanzfilterung gesucht wird und beim Senden die nächste auf Kanal B zu sendende Botschaft oder Botschaftsobjekt (Transmit Buffer 201).

In Figur 11 sind nun noch einmal die Abläufe und die Übertragungswege dargestellt. Die drei Zustandsmaschinen 501-503 steuern die jeweiligen Datenübertragungen zwischen den einzelnen Teilen. Dabei ist mit 102 wieder die Host-CPU bezeichnet, mit 201 der Eingangspufferspeicher und mit 202 der Ausgangspufferspeicher. Mit 300 ist der Botschaffisspeicher bezeichnet und die beiden Pufferspeicher für Kanal A und Kanal B mit 206 und 205. Die Schnittstellenelemente 207 und 208 sind ebenfalls dargestellt. Der erste Zustandsautomat IOBF-FSM 501 steuert den Datentransfer Z1A und Z1B, also vom Eingangspufferspeicher 201 zum Botschaftsspeicher 300 und vom Botschaftsspeicher 300 zum Ausgangspufferspeicher 202. Die Datenübertragung erfolgt dabei über Datenbusse mit einer Wortbreite von beispielsweise 32 Bit, wobei auch jede andere Bitzahl möglich ist. Gleiches gilt für die Übertragung Z2 zwischen dem Botschaftsspeicher 300 und dem Pufferspeicher 206. Diese Datenübertragung wird durch die Zustandsmaschine TBF1-FSM 502, die Zustandsmaschine für Kanal A, gesteuert. Die Übertragung Z3 zwischen Botschaftsspeicher 300 und Pufferspeicher 205 wird durch den Zustandsautomaten TBF2-FSM 503 gesteuert. Auch hier erfolgt der Datentransfer über Datenbusse mit einer beispielhaften Wordbreite von 32 Bit, wobei auch hier jede andere Bitzahl möglich ist. Normalerweise benötigt der Transfer eines kompletten Botschaftsobjektes über die genannten Übertragungswege mehrere Taktperioden T. Daher erfolgt eine Aufteilung der Übertragungszeit bezogen auf die Taktperioden T durch den Arbiter, also die AFSM 500. In Figur 11 sind also die Datenpfade zwischen denen vom Message Handler 200 kontrollierten Speicherkomponenten dargestellt. Um die Datenintegrität der im Botschaftsspeicher 300 gespeicherten Botschaftsobjekte sicherzustellen, sollten vorteilhafterweise zur gleichen Zeit nur auf einem der dargestellten Pfade, also Z1A und Z1B sowie Z2 und Z3, gleichzeitig Daten ausgetauscht werden.

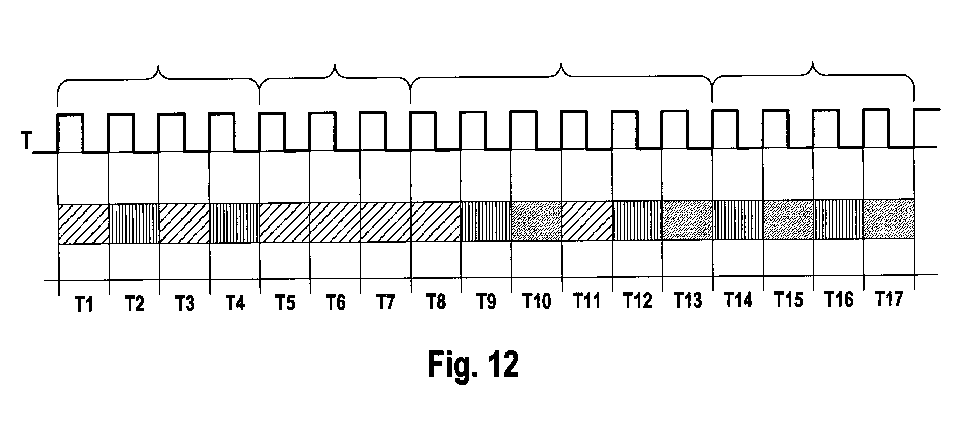

In Figur 12 ist an einem Beispiel gezeigt, wie die zur Verfügung stehenden Systemtakte T vom Arbiter, also der AFSM 500, auf die drei anfordernden Zustandsautomaten 501-503 aufgeteilt werden. In Phase 1 erfolgen Zugriffsanforderungen von Zustandsautomat 501 und Zustandsautomat 502, d.h. die gesamte Rechenzeit wird jeweils zur Hälfte auf die beiden anfordernden Zustandautomaten 501, 502 aufgeteilt. Bezogen auf die Taktperioden in Phase 1 bedeutet dies, dass Zustandsautomat 501 in den Taktperioden T1 und T3 Zugriff erhält und Zustandsautomat 502 in den Taktperioden T2 und T4. In Phase 2 erfolgt der Zugriff nur durch die Zustandsmaschine 501, sodass alle drei Taktperioden T5 bis T7, also 100% der Zugriffszeit auf den Zustandsautomat IOBF-FSM 501 entfällt. In Phase 3 erfolgen Zugriffsanforderungen aller drei Zustandsautomaten 501-503, sodass eine Drittelung der Gesamtzugriffszeit erfolgt. Der Arbiter AFSM 500 verteilt dann die Zugriffszeit beispielsweise so, dass in den Taktperioden T8 und T11 die Finite-State-Maschine 501, in den Taktperioden T9 und T12 die Finite-State-Maschine 502 und in den Taktperioden T10 und T13 die Finite-State-Maschine 503 Zugriff erhält. In Phase 4 schließlich erfolgt der Zugriff durch zwei Zustandsautomaten, 502 und 503 auf den beiden Kanälen A und B des Kommunikationsbausteins 100, sodass eine Zugriffsverteilung der Taktperioden T14 und T16 an die zweite Finite-State-Maschine 502 und in T15 und T17 an die dritte Finite-State-Maschine 503 erfolgt.

Der Arbiterzustandsautomat AFSM 500 sorgt also dafür, dass für den Fall, dass mehr als eine der drei Zustandsmaschinen 501-503 eine Anforderung für einen Zugriff auf den Botschaftsspeicher 300 stellt, der Zugriff taktweise und abwechselnd auf die anfordernden Zustandsmaschinen aufgeteilt wird. Diese Vorgehensweise stellt die Integrität der im Botschaftsspeicher 300 abgelegten Botschaftsobjekte, also die Datenintegrität, sicher. Will zum Beispiel die Host-CPU 102 über den Ausgangspufferspeicher 202 ein Botschaftsobjekt auslesen während gerade eine empfangene Botschaft in dieses Botschaftsobjekt geschrieben wird, so wird abhängig davon, welche Anforderung zuerst gestartet wurde, entweder der alte Stand oder der neue Stand ausgelesen, ohne dass die Zugriffe im Botschaftsobjekt im Botschaftsspeicher 300 selbst kollidieren.

Das beschriebene Verfahren ermöglicht der Host-CPU 102, im laufenden Betrieb jedes beliebige Botschaftsobjekt im Botschaftsspeicher 300 zu lesen oder zu schreiben, ohne dass das ausgewählte Botschaftsobjekt für die Dauer des Zugriffs der Host-CPU 102 von der Teilnahme am Datenaustausch auf beiden Kanälen A und B des FlexRay-Busses 101 gesperrt wäre (Buffer Locking). Gleichzeitig wird durch die taktweise Verschachtelung der Zugriffe die Integrität der im Botschaftsspeicher 300 abgelegten Daten sichergestellt und die Übertragungsgeschwindigkeit, auch durch Ausnutzung der vollen Bandbreite, erhöht.

Der Botschaftsspeicher 300 eines Kommunikationsbausteins 100 speichert die für die Kommunikation vorgesehenen Botschaftsobjekte. Während der Kommunikation fallen folgende Aufgaben an:

Beim Empfang einer Botschaft über die Kommunikationsverbindung 101 muss das zugehörige Botschaftsobjekt im Botschaftsspeicher 300 gefunden werden, damit die empfangene Botschaft an die entsprechende Position des Botschaftsobjekts in dem Botschaftsspeicher 300 abgespeichert werden kann. Eine empfangene Botschaft wird nur dann in dem Botschaftsspeicher 300 abgespeichert, wenn ein Identifikationsfeld der empfangenen Botschaft mit dem eines konfigurierten Botschaftsobjekts (dem sog. Empfangsobjekt) übereinstimmt. Das Identifikationsfeld des konfigurierten Empfangs-Botschaftsobjekts wird dadurch ermittelt, dass der gesamte Botschaftsspeicher 300 nach einem Botschaftsobjekt durchsucht wird,
- das zum Empfang über den betrachteten Kanal (A oder B) vorgesehen ist,
- das zum Empfang in dem betrachteten Kommunikationszyklus vorgesehen ist,
- das zum Empfang in den betrachteten Zeitschlitzen vorgesehen ist, und
- das zum Empfang vorgesehen ist.

Ebenso muss rechtzeitig zum Beginn eines Sendefensters das zu diesem Sendefenster passende Botschaftsobjekt (Sendeobjekt) im Botschaftsspeicher 300 gefunden und zum Senden bereitgestellt werden. Ein zum Versenden anstehendes Botschaftsobjekt wird nur dann versendet, wenn das Identifikationsfeld der zu sendenden Botschaft mit dem eines konfigurierten Botschaftsobjekts (dem sog. Sendeobjekt) übereinstimmt. Das Identifikationsfeld des konfigurierten Sende-Botschaftsobjekts wird dadurch ermittelt, dass der gesamte Botschaftsspeicher 300 nach einem Botschaftsobjekt durchsucht wird, das
- zum Versenden über den betrachteten Kanal (A oder B) vorgesehen ist,
- zum Versenden in dem betrachteten Kommunikationszyklus vorgesehen ist,
- zum Versenden in den betrachteten Zeitschlitzen vorgesehen ist, und
- zum Versenden vorgesehen ist.

In beiden Fällen muss das passende Botschaftsobjekt im Botschaftsspeicher rechtzeitig ermittelt werden um die Echtzeitfähigkeit des Kommunikationsbausteins sicherzustellen. Da nicht bekannt ist, an welcher Position im Botschaftsspeicher sich das Botschaftsobjekt 300 für das nächste Zeitfenster befindet, muss der Botschaftsspeicher 300 pro Zeitfenster einmal komplett durchsucht werden. Das kostet, insbesondere bei größeren Botschaftsspeichern 300, viel Zeit und kann die Echtzeitfähigkeit des Kommunikationssystems gefährden bzw. beeinträchtigen.

Die Erfindung beschreibt ein neuartiges und verbessertes Verfahren zum Durchsuchen des Botschaftsspeichers, bei dem die Identifikationsfelder der gespeicherten Botschaftsobjekte im Botschaftsspeicher 300 jeweils für mehrere Zeitfenster (oder Zeitschlitze) im Voraus durch einen einzigen Suchdurchlauf des Botschaftsspeichers 300 für die mehreren betrachteten Zeitfenster durchsucht werden. Ein Suchdurchlauf des gesamten Botschaftsspeichers 300 wird also stets für mehreren betrachteten, zukünftigen Zeitfenster in einem vorgebbaren Raster ausgeführt, wobei der Abstand der Zeitpunkte zum Ausführen des Suchdurchlaufs im Raster größer als ein Zeitfenster sind und mehrere Zeitfenster umfassen.

Insbesondere wird vorgeschlagen, dass bei einem Suchdurchlauf für mehrere betrachtete, zukünftige Zeitschlitze ausgeführt wird und die folgenden Suchkriterien überprüft werden:
- Ermittlung, ob in dem Botschaftsspeicher 300 Botschaftsobjekte für den betrachteten Übertragungskanal CH A, CH B gespeichert sind,
- Ermittlung, ob in dem Botschaftsspeicher 300 Botschaftsobjekte für den betrachteten Kommunikationszyklus gespeichert sind,
- Ermittlung, ob in dem Botschaftsspeicher 300 Botschaftsobjekte für die mehreren betrachteten, noch folgenden Zeitfenster gespeichert sind, und
- Prüfen, ob es sich bei den ermittelten Botschaftsobjekten um zu sendende oder zu empfangende Objekte handelt.

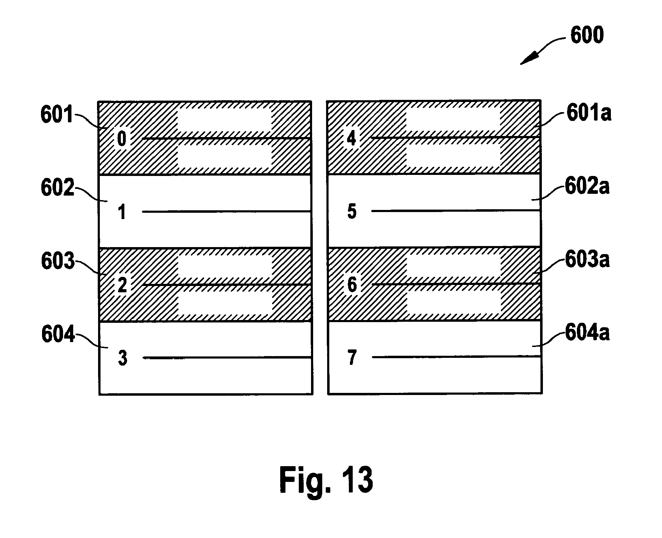

Falls in dem Botschaftsspeicher 300 eines oder mehrere Botschaftsobjekte ermittelt werden, die einer oder mehreren, vorzugsweise allen obigen Anforderungen genügen, werden die Positionen der gefundenen Objekte im Botschaftsspeicher in einem dem Botschaftsspeicher 300 zugeordneten Zwischenspeicher abgelegt, der in Figur 13 dargestellt und in seiner Gesamtheit mit dem Bezugszeichen 600 bezeichnet ist. Der Zwischenspeicher 600 ist mindestens so groß ausgebildet, dass er für jeden der im Voraus betrachteten Zeitschlitze mindestens ein Datenfeld umfasst. In dem dargestellten Ausführungsbeispiel wird der Botschaftsspeicher 300 in einem Raster von vier Zeitfenstern, d.h. lediglich alle 4 Zeitfenster, durchsucht. Allerdings erfolgt die Durchsuchung nicht nur für ein einziges, aktuelles Zeitfenster, sondern gleichzeitig bzw. quasigleichzeitig für mehrere zukünftige Zeitfenster. Somit weist der Zwischenspeicher 600 vier Datenfelder 601 bis 604 auf, um die Positionen der maximal vier ermittelten Botschaftsobjekte ablegen zu können. In jedem der Datenfelder 601 bis 604 können jeweils zwei Datenworte abgelegt werden., nämlich ein Zeiger i und ein Status i, wobei i einer eindeutigen Nummer (oder Kennung) des Datenfelds 601-604 in dem Botschaftsspeicher 300 entspricht. Das Datenfeld 601 ist vorzugsweise dem ersten zukünftigen betrachteten Zeitfenster zugeordnet, das Datenfeld 602 dem zweiten und so weiter bis hin zum Datenfeld 604, das dem letzten zukünftigen betrachteten Zeitfenster zugeordnet ist. Wenn also für das erste zukünftige betrachtete Zeitfenster ein entsprechendes Botschaftsobjekt in dem Botschaftsspeicher 300 ermittelt wird, werden Zeiger i und Status i des für das erste Zeitfenster i ermittelten Botschaftsobjekts in den beiden Datenworten des Datenfelds 601 abgelegt.

Als Datenwort Zeiger 0...3 ist in den Datenfeldern 601-604 jeweils die Position, z. B. die Nummer, des referenzierten Botschaflsobjekts in dem Botschaftsspeicher 300 abgespeichert. Bei dem Datenwort Zeiger 0...3 handelt es sich also um eine Art Zeigerelement (sog. Data-Pointer), das auf den Beginn des Botschaftsobjekts in dem Botschaftsspeicher 300, vorzugsweise auf den Beginn des Kopfbereichs HB im Kopfsegment HS, das heißt auf die Konfigurationsdaten KD, des ermittelten Botschaflsobjekts zeigt. Als Status 0...3 der in dem Botschaftsspeicher 300 abgelegten Botschaft sind in dem Zwischenspeicher 600 vorzugsweise Informationen abgelegt, ob für das betrachtete Zeitfenster überhaupt eine Botschaft zu empfangen bzw. zu senden ist und/oder ob die Botschaft zu senden oder zu empfangen ist. Falls die Botschaft zu senden ist, wird der Status 0...3 auf 'tx_buf', und falls die Botschaft zu empfangen ist, wird der Status 0..3 auf 'rx_buf' gesetzt. Falls die Botschaft für den betrachteten Zeitschlitz weder zu senden noch zu empfangen ist, wird der Status auf 'empty' gesetzt, sofern dies nicht bereits zu Beginn des Suchdurchlaufs für alle Datenworte der Datenfelder 601-604, zumindest aber für die Datenworte Status 0..3, durchgeführt wurde.

In Figur 13 erkennt man deutlich, dass der dargestellte Zwischenspeicher 600 zweifach ausgebildet ist, das heißt die Datenfelder 601-604 sind zweifach ausgebildet, so dass zusätzliche Datenfelder 601a-604a vorhanden sind. Das hat den Vorteil, dass bspw. auf die Datenfelder 601-604 im Rahmen eines Suchdurchlaufs zugegriffen werden kann, während zeitgleich auf die Datenfelder 601 a-604a im Rahmen der eigentlichen Datenübertragung, also dem Senden oder Empfangen von Daten, zugegriffen werden kann. Wenn die Datenübertragung und der Suchdurchlauf beendet sind, werden die Datenfelder vertauscht, so dass auf die Datenfelder 601a-604a im Rahmen eines Suchdurchlaufs zugegriffen werden kann, während zeitgleich auf die Datenfelder 601-604 im Rahmen der eigentlichen Datenübertragung, also dem Senden oder Empfangen von Daten, zugegriffen wird. Auf diese Weise können Wartezeiten in der Datenübertragung aufgrund des Suchdurchlaufs durch den Botschaftsspeicher 300 vermieden werden.

Sinnvollerweise wird eine Sendefilterung durchgeführt, das heißt es wird der Botschaftsspeicher 300 nach der Position (bzw. dem Botschaftsobjekt) durchsucht, die für die Zwischenspeicherung einer Botschaft vorgesehen ist, die von der Host-CPU 102 in dem betrachteten Kommunikationszyklus und in dem betrachteten Zeitfenster über den betrachteten Kanal über die Kommunikationsverbindung 101 gesendet werden soll. Zusätzlich oder alternativ wird eine Empfangsfilterung durchgeführt, das heißt der Botschaftsspeicher 300 wird nach der Position (bzw. dem Botschaftsobjekt) durchsucht, die für die Zwischenspeicherung einer Botschaft vorgesehen ist, die von der Host-CPU 102 in dem betrachteten Kommunikationszyklus und in dem betrachteten Zeitfenster über den betrachteten Kanal von der Kommunikationsverbindung 101 empfangen werden soll. Ziel des Suchverfahrens ist die Reduktion der Anzahl der pro Kommunikationszyklus erforderlichen Suchdurchläufe durch den Botschaftsspeicher 300 und damit eine Verbesserung der Echtzeitfähigkeit des Kommunikationsbausteins 100.

Die Beschreibung bezieht sich auf einen Zwischenspeicher 600 mit insgesamt 8 Elementen 601-604 und 601a-604a. Die Größe des Zwischenspeichers 600 lässt sich jedoch unter Beibehaltung des erfindungsgemäßen Verfahrens zur Datenübertragung, insbesondere des vorgeschlagenen Suchverfahrens, beliebig variieren, insbesondere vergrößern, und damit flexibel an die Größe des Botschaftsspeichers 300 anpassen. Außerdem kann über die Größe des Zwischenspeichers 600 vorab festgelegt werden, für wie viele Zeitfenster der Botschaftsspeicher 300 im Rahmen eines Suchdurchlaufs maximal im Voraus durchsucht werden soll. Um eine ordnungsgemäße Funktion des erfindungsgemäßen Verfahrens sicherstellen zu können, insbesondere um ein Überspringen von zu sendenden bzw. zu empfangenden Botschaften zu vermeiden, sollte zwischen dem Ende des Suchdurchlaufs für bestimmte Zeitschlitze und dem Ende der eigentlichen Datenübertragung für diese Zeitschlitze nach Möglichkeit keine Re-Konfiguration des Botschaftsspeichers 300 erfolgen. Eine solche würde nämlich die beim letzten Suchdurchlauf ermittelten Inhalte des Zwischenspeichers 600 möglicherweise ungültig werden lassen, weil sich durch die Re-Konfiguration die Zuordnung der Speicherbereiche des Botschaftsspeichers 300 zu den zu sendenden bzw. zu empfangenden Botschaften der betreffenden Zeitschlitze unter Umständen verändert haben könnte. In einem solchen Fall wäre ein erneuter Sendedurchlauf erforderlich, was zumindest zu einer Verzögerung bei der Datenübertragung unter Umständen sogar zu einem geringen Datenverlust führen könnte. In der FlexRay-Spezifikation sind jedoch geeignete Mechanismen enthalten, um eine solche Verzögerung oder einen solchen Datenverlust auffangen zu können, so dass keine negativen Auswirkungen auf die Datenübertragung zu befürchten sind.

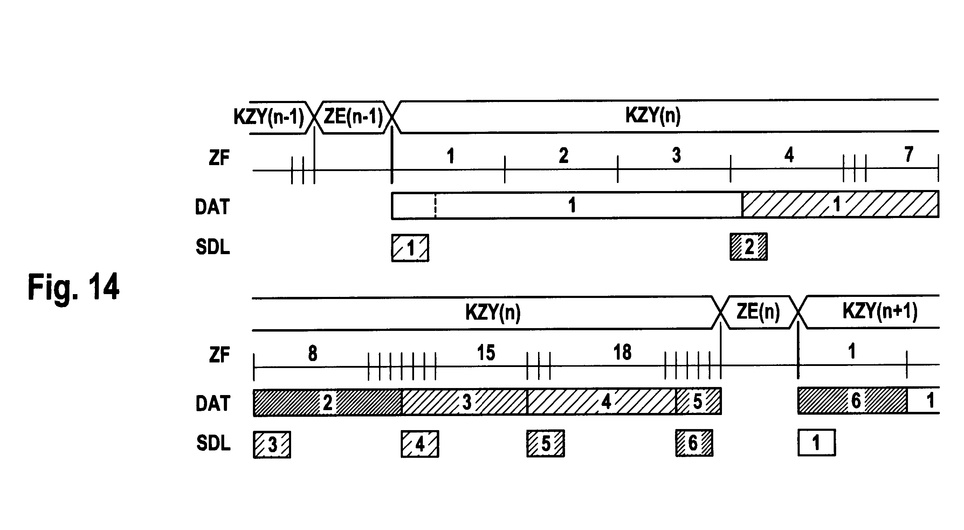

Das erfindungsgemäße Verfahren wird nachfolgend anhand der Figur 14 näher erläutert. In Figur 14 ist mit KZY der Kommunikationszyklus bezeichnet. Mit ZE ist das Zyklusende und mit ZF sind die Zeitfenster bezeichnet. Mit SDL ist der Suchdurchlauf bezeichnet. Mit DAT ist schließlich die eigentliche Datenübertragung, das heißt das Senden von Botschaften bzw. das Empfangen von Botschaften, bezeichnet. In Figur 14 wird ein Kommunikationszyklus KZY(n) betrachtet. Dieser umfasst zunächst vier Zeitfenster "1" bis "4" eines statischen Segments des Zyklus KZY(n) gefolgt von insgesamt 20 Zeitfenstern eines dynamischen Segments des Zyklus KZY(n). Am Zyklusende ZE(n) sind bspw. ein Symbol Window (sofern vorhanden) und die sog. Network Idle Time (NIT) enthalten, die zur Uhrensynchronisation der lokalen Uhren der Teilnehmer 102 dient. In dem dargestellten Ausführungsbeispiel wird der Botschaftsspeicher stets für vier Zeitschlitze ZF im Voraus durchsucht. Lediglich der erste Suchdurchlauf nach dem Start des erfindungsgemäßen Verfahrens bildet eine Ausnahme, da zunächst alle 8 Elemente 601-604 und 601 a-604a des Zwischenspeichers 600 gefüllt werden müssen.

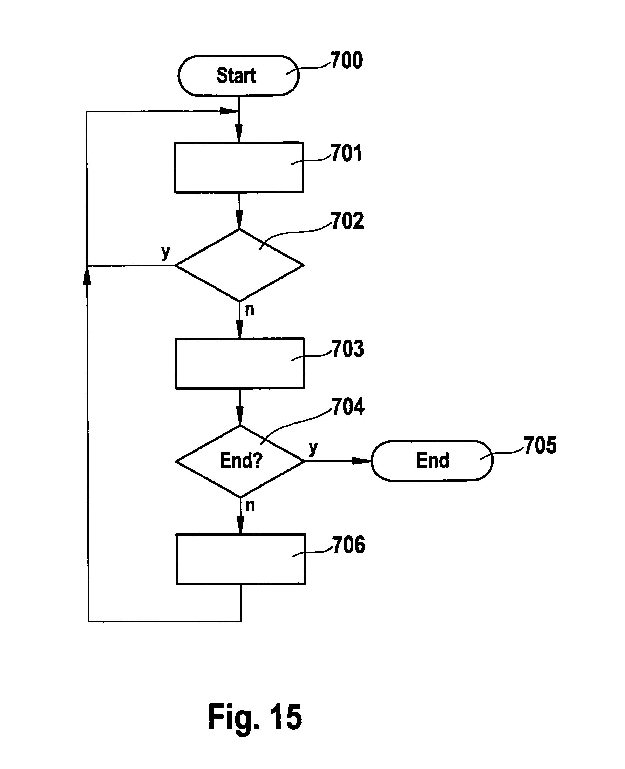

Ein Ablaufdiagramm des erfindungsgemäßen Verfahrens ist in Figur 15 dargestellt. Das Verfahren beginnt in einem Funktionsblock 700. In einem Funktionsblock 701 wird eine erster Suchdurchlauf durchlaufen, der nachfolgend näher erläutert wird. Im Rahmen des Suchdurchlaufs werden bspw. in den Feldern bzw. Elementen 601-604 des Zwischenspeichers 600 die entsprechenden Informationen, die für die anschließende eigentliche Datenübertragung benötigt werden, abgelegt. Falls es sich um den ersten Suchdurchlauf nach dem Start des erfindungsgemäßen Verfahrens handelt, sind die übrigen Felder bzw. Elemente 601a-604a des Zwischenspeichers 600 noch leer und müssen durch einen unmittelbar anschließenden weiteren Suchdurchlauf gefüllt werden. Deshalb wird in einem Abfrageblock 702 geprüft, ob es sich um den ersten Suchdurchlauf seit dem Start des Verfahrens handelt oder nicht. Falls ja, wird der Suchdurchlauf 701 nochmals durchlaufen, ansonsten wird zu einem Funktionsblock 703 verzweigt, wo die eigentliche Datenübertragung, das heißt das Senden und/oder Empfangen von Botschaften, für denjenigen Teilnehmer 102 ausgeführt wird, dem der Kommunikationsbaustein 100, dessen Botschaftsspeicher 300 in dem vorangegangenen Suchdurchlauf durchsucht wurde. Anschließend wird in einem Abfrageblock 704 überprüft, ob das erfindungsgemäße Verfahren beendet ist. Falls ja, wird zu einem Block 705 verzweigt und das Verfahren beendet. Ansonsten wird zu einem Funktionsblock 706 verzweigt, wo die Felder bzw. Elemente 601-604 des Zwischenspeichers 600 mit den Feldern bzw. Elementen 601a-604a vertauscht werden, so dass die in einem anschließenden Suchdurchlauf 701 ermittelten Informationen, insbesondere die Positionen der Botschaftsobjekte, nicht mehr in den Feldern 601-604, sondern nunmehr in den Feldern 601a-604a abgelegt werden. Ebenfalls als Folge des Vertauschens der Felder des Zwischenspeichers 600 in dem Funktionsblock 706 wird während der nachfolgenden eigentlichen Datenübertragung nicht mehr auf die Felder 601a-604a, sondern nunmehr auf die Felder 601-604 zugegriffen. Im Funktionsblock 706 werden außerdem die nächsten vier Zeitschlitze als die in dem nachfolgenden Suchdurchlauf zu betrachtenden Zeitschlitze festgelegt. Dann wird wieder zu dem Funktionsblock 701 verzweigt und nochmals ein Suchdurchlauf und eine eigentliche Datenübertragung diesmal jedoch jeweils für die nächsten vier Zeitschlitze als im vorangegangenen Durchlauf ausgeführt.

Der in Figur 15 allgemein mit dem Bezugszeichen 701 bezeichnete Suchdurchlauf wird anhand des Ausführungsbeispiels aus Figur 14 näher erläutert. Der Suchdurchlauf wird für vier aufeinander folgende Zeitfenster ZF ausgeführt, wobei für alle vier Zeitfenster nach einem passenden Botschaftsobjekt im Botschaftsspeicher 300 gesucht wird. Da das erste Zeitfenster "0" gemäß Spezifikation nicht existiert, umfasst der erste Suchdurchlauf ausnahmsweise lediglich drei Zeitfenster ZF. Alle nachfolgende Suchdurchläufe umfassen jedoch vier Zeitfenster ZF. Um ein passendes Objekt zu ermitteln, werden insbesondere die bereits oben angeführten Kriterien Kommunikationszyklus, Zeitschlitz, Kanal und Senden/Empfangen überprüft. Das Suchergebnis in Form der Position der ermittelten passenden Botschaftsobjekte im Botschaftsspeicher 300 wird in dem Zwischenspeicher 600 abgelegt. Der Zwischenspeicher besteht aus einer Liste mit 8 Elementen 601-604 und 601a-604a, Element "0" bis Element "7".

Nach Abschluss der Konfigurationsphase des Kommunikationsbausteins 100 und am Ende eines jeden Kommunikationszyklus KZY(n-1) wird der Zwischenspeicher 600 gelöscht. Alle Zeiger "0" bis "7" werden auf 0 und alle Statusinformationsfelder "0" bis "7" werden auf'empty' gesetzt. Der erste Suchdurchlauf verläuft ausnahmsweise etwas abweichend von den anderen Suchdurchläufen. Im letzten Suchdurchlauf des vorangegangen Zyklus KZY(n-1) wird der Botschaftsspeicher 300 nach passenden Botschaftsobjekten für den ersten Zeitschlitz ZF des nachfolgenden Kommunikationszyklus KZY(n) durchsucht. Falls es keinen vorangegangenen Kommunikationszyklus KZY(n-1) gibt, weil bspw. das System soeben hochgefahren und konfiguriert wurde, wird der Botschaftsspeicher 300 nach passenden Botschaftsobjekten für den ersten Zeitschlitz ZF des nachfolgenden Kommunikationszyklus KZY(n) im Anschluss an die Konfigurationsphase durchsucht. Das Ergebnis dieser Suche wird in dem Zwischenspeicher in dem Element "1" 602 abgespeichert.

Anschließend beginnt der Kommunikationszyklus KZY(n) und wird in dem ersten Zeitschlitz ZF1 ein reduzierter Suchdurchlauf ausgeführt, während dem der Botschaftsspeicher 300 nach passenden Botschaftsobjekten für die Zeitschlitze ZF2 und ZF3 durchsucht wird. Die Ergebnisse des reduzierten Suchdurchlaufs werden in den Elementen "2" 603 und "3" 604 des Zwischenspeichers 600 abgelegt. Darüber hinaus muss der Botschaftsspeicher 300 in dem ersten Zeitschlitz ZF1 auch nach passenden Botschaftsobjekten für die nachfolgenden vier Zeitschlitze ZF4 bis ZF7 durchsucht werden. Die Ergebnisse dieser Suche werden in den Elementen "4" 601a bis "7" 604a des Zwischenspeichers 600 abgelegt. Die Suche nach passenden Objekten für die Zeitschlitze ZF2 bis ZF7 kann während eines einzigen Suchdurchlaufs SDL1 erfolgen. Des weiteren wird in dem erstem Zeitschlitz ZF1 die eigentliche Datenübertragung der für den ersten Zeitschlitz ZF1 vorgesehenen Botschaft durchgeführt. Da der erste Zeitschlitz ZF1 gemäß FlexRay-Spezifikation mit Sicherheit ein statischer Zeitschlitz ist, der - anders als dynamische Zeitschlitze - eine bestimmte Mindestdauer nicht unterschreitet, die ausreichend lang ist, um alle oben angegebenen Schritte während des ersten Zeitschlitzes ZF1 auszuführen. Da der Zwischenspeicher 600 zum Zeitpunkt des ersten Suchdurchlaufs SDL1 leer ist, müssen in dem Zwischenspeicher 600 nur dann Informationen abgelegt werden, falls in dem Botschaftsspeicher 300 wirklich passende Botschaftsobjekte gefunden wurden. Falls keine Objekte für einen bestimmten Zeitschlitz ZF gefunden wurden, verbleibt das entsprechende Element 601-604 oder 601a-604a auf Zeiger = '0' und Status = 'empty'.

Beim ersten Suchdurchlauf SDL1 wird im ersten Zeitfenster ZF1 zuerst das Identifikationsfeld des ersten Botschaftsobjekts aus dem Kopfteil HS des Botschaftsspeichers 300 ausgelesen. Das Identifikationsfeld einer Botschaft umfasst mindestens die nachfolgenden Status-Bits: 11 Bit Frame ID (Bits 0 bis 10 des Header Words), 7 Bit Cycle Code (Bits 16 bis 22 des Header Words), 1 Bit Channel A (CH A) (Bit 24 des Header Words), 1 Bit Channel B (CH B) (Bit 25 des Header Words) und ein Bit Transmission Mode (TXM) (Bit 28 des Header Words). Passt dieses Identifikationsfeld auf eines der Zeitfenster ZF2 bis ZF7 des betrachteten Kommunikationszyklus KZY(n), so wird der Zeiger des entsprechenden Elementes "2" bis "7" des Zwischenspeichers 600 auf die Nummer des Botschaftsobjekts im Botschaftsspeicher 300 gesetzt und der entsprechende Status "2" bis "7" auf 'tx_buf' oder 'rx_buf' gesetzt, je nach dem ob die Botschaft gesendet oder empfangen werden soll.

Dann wird - immer noch im Rahmen des gleichen Suchdurchlaufs SDL1 - das Identifikationsfeld des nächsten Botschaftsobjekts ausgelesen, geprüft ob eine Übereinstimmung für Zeitfenster ZF2 bis ZF7 besteht, und nötigenfalls der Zeiger und das Statusinformationsfeld des entsprechenden Elements 601-604, 601a-604a des Zwischenspeichers 600 gesetzt.

Sollte der Status des entsprechenden Zwischenspeicher Elements bereits nicht mehr auf'empty' stehen, so wird kein Zeiger und keine Statusinformation im Zwischenspeicher 600 abgespeichert. Sind also zwei oder mehr Botschaftsobjekte für das gleiche Zeitfenster ZF im gleichen Kommunikationszyklus KZY(n) konfiguriert, so wird das erste verwendet und die nachfolgenden werden verworfen.

Mit dem Auslesen des letzten Identifikationsfelds aus dem Kopfteil des Botschaftsspeichers 300 ist der Suchdurchlauf SDL1 abgeschlossen. Nun kann im Rahmen der eigentlichen Datenübertragung ohne große Zeitverzögerung für die Zeitfenster ZF1 bis ZF7 die Nummer des passenden Botschaftsobjekts direkt aus dem Zwischenspeicher 600 entnommen werden.

Mit Beginn des Zeitfensters ZF4 sind die Elemente 602 bis 604 des Zwischenspeichers 600 abgearbeitet (das Element 601 wurde nicht benötigt, da ein Zeitfenster ZF0 fehlt), das heißt die eigentliche Datenübertragung während dieser Zeitfenster ZF1 bis ZF3 wurde bereits ausgeführt. Die Elemente 601 bis 604 des Zwischenspeichers 600 können nun gelöscht werden (Zeiger ='0', Status ='empty'), und der nächste Suchdurchlauf SDL2 wird gestartet. Dieser Suchdurchlauf bezieht sich auf die Zeitfenster ZF8 bis ZF11 des aktuellen Kommunikationszyklus KZY(n). Die Suchergebnisse werden auf den Elementen "0" 601 bis "3" 604 des Zwischenspeichers 600 abgelegt. Mit Beginn des Zeitfensters ZF8 wird ein weiterer Suchdurchlauf SDL3 für die Zeitfensters ZF12 bis ZF15 gestartet. Die Suchergebnisse werden auf den Zwischenspeicher Elementen "4" 601a bis "7" 604a abgelegt, die ebenfalls zu Beginn des neuen Suchdurchlaufs SDL3 gelöscht wurden (Zeiger ='0', Status ='empty').

Parallel zu den Suchdurchläufen SDL erfolgt die Abarbeitung der eigentlichen Datenübertragung DAT nach Erreichen des jeweiligen Zeitfensters ZF. So wird bspw. während des zweiten Suchdurchlaufs SDL2 die eigentliche Datenübertragung für die Zeitfenster ZF4 bis ZF7 abgearbeitet, wobei die Informationen, wo die zu übertragenden (zu sendenden oder zu empfangenden) Botschaften in dem Botschaftsspeicher 300 abzulegen oder aus dem Botschaftsspeicher 300 auszulesen sind, den Elementen "4" 601a bis "7" 604a des Zwischenspeichers 600 entnommen werden, wo sie während des ersten Suchdurchlaufs SDL1 abgelegt wurden. Ebenso wird während des dritten Suchdurchlaufs SDL3 die eigentliche Datenübertragung für die Zeitfenster ZF8 bis ZF11 abgearbeitet, wobei die Informationen, wo die zu übertragenden Botschaften in dem Botschaftsspeicher 300 abzulegen oder aus dem Botschaftsspeicher 300 auszulesen sind, den Elementen "0" 601 bis "3" 604 des Zwischenspeichers 600 entnommen werden, wo sie während des zweiten Suchdurchlaufs SDL2 abgelegt wurden. In entsprechender Weise laufen die weiteren Suchdurchläufe SDL4 bis SDL6 ab, wobei während des letzten Suchdurchlaufs SDL6 des aktuellen Kommunikationszyklus KZY(n) der Botschaftsspeicher 300 - wie oben bereits erläutert - nach passenden Botschaftsobjekten für den ersten Zeitschlitz ZF1 des darauffolgenden Kommunikationszyklus KZY(n+1) durchsucht wird.

Jeder Suchdurchlauf SDL kann durch andere Abläufe unterbrochen werden, muss aber nach spätestens vier Zeitfenstern ZF abgeschlossen sein. Sollte diese Anforderung nicht erreichbar sein, so kann der Zwischenspeicher 600 z.B. auch von 8 auf 16 Elemente vergrößert werden. Hierdurch erhöht sich die verfügbare Zeit auf z.B. 8 Zeitfenster. Allerdings wird dadurch die Flexibilität in dem Datenübertragungssystem eingeschränkt, da für die nunmehr 8 Zeitfenster, welche vorab durchsucht wurden, keine Re-Konfiguration auftreten sollte, bevor für diese Zeitfenster nicht die eigentliche Datenübertragung abgearbeitet worden ist.

Wird für ein Sendeobjekt zu Beginn des zugeordneten Zeitfensters ZF der Transfer aus dem Botschaftsspeicher 300 in die Sendeeinheit begonnen, so wird überprüft, ob das Botschaftsobjekt in der Zwischenzeit nicht verändert wurde. Ist dies passiert, so wird der Eintrag im Zwischenspeicher 600 verworfen, und das entsprechende Botschaftsobjekt nicht gesendet. Wird für ein Empfangsobjekt am Ende des zugeordneten Zeitfensters ZF (Anfang des nächsten Zeitfensters) mit dem Transfer aus der Empfangseinheit begonnen, wird überprüft, ob das Botschaftsobjekt in der Zwischenzeit nicht verändert wurde. Ist dies passiert, so wird der Eintrag im Zwischenspeicher 600 verworfen, und die empfangene Botschaft nicht gespeichert. Die Überprüfung der Datenintegrität kann bspw. mittels einer Checksummenbildung oder auf beliebig andere Weise (bspw. Parity-Bit oder CRC) erfolgen.

Dem kundigen Fachmann ergibt sich eine Vielzahl von Erweiterungsmöglichkeiten der vorliegenden Erfindung die realisiert werden können. Nachfolgend seien beispielhaft nur einige mögliche Erweitungsmöglichkeiten aufgeführt.

Wird während des Betriebs des Datenübertragungssystems ein Botschaftsobjekt im Botschafuspeicher 300 umkonfiguriert, so wird überprüft, ob das Identifikationsfeld zu dem aktuellen Zeitfenster-Bereich ZFi bis ZFi+3des Zwischenspeichers 600 passt. Wenn ja, wird bei Bedarf das entsprechende Zwischenspeicher Element 601-604 und 601a-604a umgesetzt. Durch diese Erweiterung ist es möglich ein Botschaftsobjekt bis zu Beginn des im Identifikationsfeld festgelegten Zeitfensters ZF umzukonfigurieren, unabhängig von der Größe des Zwischenspeichers 600.

Durch das beschriebene Verfahren wird der Botschaftsspeicher 300 eines Kommunikationsbausteins 100 in vorausschauender weise nach den für die nächsten Zeitfenster ZF passenden Botschaftsobjekten durchsucht. Über die im Zwischenspeicher 600 abgelegten Zeiger auf die Botschaftsobjekte und deren Status kann ein schneller Zugriff auf die für die nächsten Zeitfenster ZF vorgesehen Botschaftsobjekte erfolgen. Es ist also kein separater Suchdurchlauf durch den gesamten Botschaftsspeicher 300 pro Zeitfenster ZF mehr erforderlich.

Die Verwendung des beschriebenen Suchverfahrens reduziert die Anzahl der pro Kommunikationszyklus KZY(n) erforderlichen Suchdurchläufe durch den Botschaftsspeicher 300. Dadurch lässt sich die Echtzeitfähigkeit des Kommunikationsbausteins 100 entscheidend verbessern.

## Patentansprüche

1. Verfahren zum Übertragen von Daten in Botschaften, die in vorgebbaren Zeitfenstern (ZF) über eine Kommunikationsverbindung (101) eines Kommunikationssystems zyklisch übertragen werden, wobei über die Kommunikationsverbindung (101) zu sendende und gesendete Botschaften zunächst in einem Botschaftsspeicher (300) eines Kommunikationsbausteins (100) zwischengespeichert werden und die in einem aktuellen Zeitfenster (ZF) zu sendende bzw. zu empfangende Botschaft aus dem Botschaftsspeicher (300) entnommen und gesendet bzw. empfangen und in dem Botschaftsspeicher (300) abgelegt wird, **dadurch gekennzeichnet, dass** zur Ermittlung der Positionen der Botschaften in dem Botschaftsspeicher (300) der Botschaftsspeicher (300) in einem vorgebbaren Raster jeweils für mehrere noch folgende Zeitfenster (ZF) im Voraus durchsucht wird, dass ein Suchdurchlauf in dem Raster mehrere Zeitfenster (ZF) umfasst, und dass als Ergebnis des Suchdurchlaufs die Positionen der in den mehreren noch folgenden Zeitfenstern (ZF) zu sendenden bzw. zu empfangenden Botschaften in einem dem Botschaftsspeicher (300) zugeordneten Zwischenspeicher (600) abgelegt werden.

2. Verfahren nach Anspruch 1, **dadurch gekennzeichnet, dass** im Rahmen der Datenübertragung die in dem aktuellen Zeitfenster (ZF) über das Kommunikationssystem zu übertragende Botschaft aus der in dem Zwischenspeicher (600) für dieses Zeitfenster (ZF) angegebenen Position des Botschaftsspeichers (300) ausgelesen und über die Kommunikationsverbindung (101) übertragen wird bzw. die in dem aktuellen Zeitfenster (ZF) über die Kommunikationsverbindung (101) übertragene Botschaft an der in dem Zwischenspeicher (600) für dieses Zeitfenster (ZF) angegebenen Position des Botschaftsspeichers (300) abgelegt wird.

3. Verfahren nach Anspruch 1 oder 2, **dadurch gekennzeichnet, dass** die Datenübertragung für das aktuelle Zeitfenster (ZF) und die nachfolgenden mehreren Zeitfenster (ZF8-ZF11), für welche die Positionen der Botschaften in dem Botschaftsspeicher (300) in dem Zwischenspeicher (600) bereits abgelegt wurden, nach Erreichen der jeweiligen Zeitfenster (ZF8-ZF11) zeitgleich mit dem Suchdurchlauf (SDL3) für das sich an das letzte Zeitfenster (ZF11) der Datenübertragung anschließende Zeitfenster (ZF) und die nachfolgenden mehreren Zeitfenster (ZF12-ZF15) ausgeführt wird.

4. Verfahren nach einem der Ansprüche 1 bis 3, **dadurch gekennzeichnet, dass** die Anzahl der mehreren Zeitfenster des Suchdurchlaufs (SDL) gleich groß ist wie die Anzahl der mehreren Zeitfenster für die Datenübertragung (DAT).

5. Verfahren nach einem der Ansprüche 1 bis 4, **dadurch gekennzeichnet, dass** in den in dem Botschaftsspeicher (300) zu speichernden Botschaften erste Daten (KD0, KD1, KDk) mit einem ersten Datenumfang und zweite Daten (D0, Dl, Dk) mit einem zweiten Datenumfang enthalten sind und die ersten Daten (KD0, KD1, KDk) in ein Kopfsegment (HS) des Botschaftsspeichers (300) in je einem Kopfbereich (HB0, HB1, HBk) pro Botschaft gespeichert werden und die zweiten Daten (D0, Dl, Dk) in ein Datensegment (DS) in je einem Datenbereich (DB0, DB1, DBk) pro Botschaft gespeichert werden.

6. Verfahren nach Anspruch 5, **dadurch gekennzeichnet, dass** in dem Kopfbereich (HB0, HB1, HBk) des Botschaftsspeichers (300) pro Botschaft eine Kennung abgelegt ist, welche die jeweilige Botschaft identifiziert und durch welche die Botschaft einem bestimmten Kommunikationszyklus (KZY), einem bestimmten Zeitfenster (ZF) innerhalb des Zyklus (KZY) und einem Kanal (CH A, CH B) oder zwei Kanälen (CH A, CH B) zugeordnet werden kann.

7. Verfahren nach einem der Ansprüche 1 bis 6, **dadurch gekennzeichnet, dass** für jede der während eines Suchdurchlaufs (SDL) betrachtete und in einem der mehreren noch folgenden Zeitfenster (ZF) zu sendende bzw. zu empfangende Botschaft in dem Zwischenspeicher (600) zwei Felder ("Zeiger", "Status") vorgesehen sind, wobei in einem ersten Feld ("Zeiger") ein Zeiger auf die entsprechende Position der in dem Botschaftsspeicher (300) abgelegten Botschaft und in einem zweiten Feld ("Status") ein Status der in dem Botschaftsspeicher (300) abgelegten Botschaft abgelegt wird.

8. Verfahren nach Anspruch 5 und 7, **dadurch gekennzeichnet, dass** der Zeiger auf in einem Kopfbereich (HB0, HB1, HBk) im Kopfsegment (HS) gespeicherte erste Daten (KD0, KD1, KDk) der in dem Botschaftsspeicher (300) abgelegten Botschaft zeigt.

9. Verfahren nach Anspruch 7 oder 8, **dadurch gekennzeichnet, dass** als Status der in dem Botschaftsspeicher (300) abgelegten Botschaft in dem Zwischenspeicher (600) Informationen abgelegt sind, ob für das betrachtete Zeitfenster (ZF) überhaupt eine Botschaft zu empfangen bzw. zu senden ist ('empty') und/oder ob die Botschaft zu senden ('tx_buf') oder zu empfangen ('rx_buf') ist.

10. Verfahren nach einem der Ansprüche 3 bis 9, **dadurch gekennzeichnet, dass** der Zwischenspeicher (600) unterteilt ist, wobei in einem ersten Teil (601-604) des Zwischenspeichers (600) für die Datenübertragung die Positionen der Botschaften für das aktuelle Zeitfenster (ZF) und die nachfolgenden mehreren Zeitfenster (ZF8-ZF11), für welche in dem Botschaftsspeicher (300) in dem Zwischenspeicher (600) bereits abgelegt wurden, abgelegt sind und in einem zweiten Teil (601a-604a) des Zwischenspeichers (600) für einen Suchdurchlauf (SDL) die Positionen der Botschaften für das sich an das letzte Zeitfenster (ZF11) der Datenübertragung anschließende Zeitfenster (ZF) und die nachfolgenden mehreren Zeitfenster (ZF12-ZF15) abgelegt werden.

11. Verfahren nach einem der Ansprüche 1 bis 10, **dadurch gekennzeichnet, dass** zur Ermittlung der Positionen der Botschaften in dem Botschaftsspeicher (300) dieser in regelmäßigen Abständen jeweils für vier noch folgende Zeitfenster (ZF) im Voraus durchsucht wird, und dass als Ergebnis eines Suchdurchlaufs die Positionen der in den vier noch folgenden Zeitfenstern (ZF) zu sendenden bzw. zu empfangenden Botschaften in dem Zwischenspeicher (600) abgelegt werden.

12. Verfahren nach einem der Ansprüche 1 bis 11, **dadurch gekennzeichnet, dass** im Rahmen eines Suchdurchlaufs der Botschaftsspeicher (300) für die mehreren noch folgenden Zeitfenster (ZF) nach einem oder mehreren der nachfolgenden Kriterien durchsucht wird:
- Ermittlung, ob in dem Botschaftsspeicher (300) Botschaften für einen betrachteten Übertragungskanal (CH A, CH B) gespeichert sind,
- Ermittlung, ob in dem Botschaftsspeicher (300) Botschaften für einen betrachteten Kommunikationszyklus (KZY) gespeichert sind,
- Ermittlung, ob in dem Botschaftsspeicher (300) Botschaften für die mehreren noch folgenden Zeitfenster (ZF) gespeichert sind, und
- Ermittlung, ob es sich bei den ermittelten Botschaften um zu sendende oder zu empfangende Botschaften handelt.

13. Kommunikationsbaustein (100), der in einem Kommunikationssystem zwischen einer Kommunikationsverbindung (101) und einem Teilnehmer angeordnet ist, wobei das Kommunikationssystem zur zyklischen Übermittlung von Botschaften in vorgebbaren Zeitfenstern ausgebildet ist und der Kommunikationsbaustein (100) einen Botschaftsspeicher (300) zum Zwischenspeichern von Botschaften aufweist, die von dem Teilnehmer über die Kommunikationsverbindung (101) zu übertragen sind oder die für den Teilnehmer über die Kommunikationsverbindung (101) empfangen wurden, **dadurch gekennzeichnet, dass** der Kommunikationsbaustein (100) zur Ermittlung der Positionen der Botschaften in dem Botschaftsspeicher (300) Mittel zum Durchsuchen des Botschaftsspeichers (300) in einem vorgebbaren Raster_jeweils für mehrere noch folgende Zeitfenster im Voraus einen dem Botschaftsspeicher (300) zugeordneten Zwischenspeicher und Mittel zum Ablegen der Positionen der in den mehreren noch folgenden Zeitfenstern zu sendenden bzw. zu empfangenden Botschaften in dem Zwischenspeicher (600) als Ergebnis eines Suchdurchlaufs aufweist und dass der Suchdurchlauf in dem Raster mehrere Zeitfenster (ZF) umfasst.

14. Kommunikationsbaustein (100) nach Anspruch 13, **dadurch gekennzeichnet, dass** die Mittel zum Durchsuchen des Botschaftsspeichers (300) und die Mittel zum Ablegen der Positionen der ermittelten Botschaften in dem Zwischenspeicher (600) als ein Zustandsautomat (504) ausgebildet sind.

15. Kommunikationsbaustein (100) nach Anspruch 13 oder 14, **dadurch gekennzeichnet, dass** der Kommunikationsbaustein (100) als ein FlexRay-Kommunikationsbaustein zum Empfangen, Senden und Zwischenspeichern von nach einer FlexRay-Spezifikation übermittelten Botschaften ausgebildet ist.

16. Kommunikationsbaustein (100) nach einem der Ansprüche 13 bis 15, **dadurch gekennzeichnet, dass** die Mittel zum Durchsuchen des Botschaftsspeichers (300) und die Mittel zum Ablegen der Positionen der ermittelten Botschaften in dem Zwischenspeicher (600) zur Ausführung eines Verfahrens nach einem der Ansprüche 2 bis 12 ausgebildet sind.

17. Kommunikationssystem mit mehreren an eine Kommunikationsverbindung (101) angeschlossenen Teilnehmern (102), wobei zwischen der Kommunikationsverbindung (101) und mindestens einem der Teilnehmer (102) ein Kommunikationsbaustein (100) angeordnet ist, wobei das Kommunikationssystem zur zyklischen Übermittlung von Botschaften in vorgebbaren Zeitfenstern (ZF) ausgebildet ist und der Kommunikationsbaustein (100) einen Botschaftsspeicher (300) zum Zwischenspeichern von Botschaften aufweist, die von dem mindestens einen Teilnehmer (102) über die Kommunikationsverbindung (101) zu übertragen sind oder die für den mindestens einen Teilnehmer (102) über die Kommunikationsverbindung (101) empfangen wurden, **dadurch gekennzeichnet, dass** der Kommunikationsbaustein (100) zur Ermittlung der Positionen der Botschaften in dem Botschaftsspeicher (300) Mittel zum Durchsuchen des Botschaftsspeichers (100) in einem vorgebbaren Raster jeweils für mehrere noch folgende Zeitfenster (ZF) im Voraus, einen dem Botschaftsspeicher (300) zugeordneten Zwischenspeicher (600) und Mittel zum Ablegen der Positionen der in den mehreren noch folgenden Zeitfenstern (ZF) zu sendenden bzw. zu empfangenden Botschaften in dem Zwischenspeicher (600) als Ergebnis eines Suchdurchlaufs aufweist und dass der Suchdurchlauf in dem Raster mehrere Zeitfenster (ZF) umfasst.

18. Kommunikationssystem nach Anspruch 17, **dadurch gekennzeichnet, dass** der Kommunikationsbaustein (100) nach einem der Ansprüche 14 bis 16 ausgebildet ist.

## Claims

1. Method for transmitting data in messages which are transmitted cyclically in prescribable time windows (ZF) via a communication link (101) in a communication system, wherein messages which have to be and have been sent via the communication link (101) are first of all buffer-stored in a message memory (300) of a communication chip (100) and the message to be sent and/or received in a current time window (ZF) is removed from the message memory (300) and sent and/or received and stored in the message memory (300), **characterized in that** for the purpose of ascertaining the positions of the messages in the message memory (300), the message memory (300) is searched in a prescribable grid for a respective plurality of still ensuing time windows (ZF) in advance, **in that** a search pass in the grid comprises a plurality of time windows (ZF), and **in that** the result of the search pass is that the positions of the messages to be sent and/or received in the plurality of still ensuing time windows (ZF) are stored in a buffer store (600) associated with the message memory (300).

2. Method according to Claim 1, **characterized in that** in the course of the data transmission the message to be transmitted in the current time window (ZF) via the communication system is read from that position in the message memory (300) which is indicated in the buffer store (600) for this time window (ZF) and is transmitted via the communication link (101), or the message transmitted in the current time window (ZF) via the communication link (101) is stored at that position in the message memory (300) which is indicated in the buffer store (600) for this time window (ZF).

3. Method according to Claim 1 or 2, **characterized in that** the data transmission for the current time window (ZF) and the subsequent plurality of time windows (ZF8-ZF11) , for which the positions of the messages in the message memory (300) have already been stored in the buffer store (600), is performed after the respective time windows (ZF8-ZF11) have been reached at the same time as the search pass (SDL3) for the time window (ZF) following the last time window (ZF11) of the data transmission and for the subsequent plurality of time windows (ZF12-ZF15).

4. Method according to one of Claims 1 to 3, **characterized in that** the number of the plurality of time windows for the search pass (SDL) is the same size as the number of the plurality of time windows for the data transmission (DAT).

5. Method according to one of Claims 1 to 4, **characterized in that** the messages to be stored in the message memory (300) contain first data (KD0, KD1, KDk) with a first scope of data and second data (D0, D1, Dk) with a second scope of data, and the first data (KD0, KD1, KDk) are stored in a head segment (HS) of the message memory (300) in a respective head area (HB0, HB1, HBk) per message, and the second data (D0, D1, Dk) are stored in a data segment (DS) in a respective data area (DB0, DB1, DBk) per message.

6. Method according to Claim 5, **characterized in that** the head area (HB0, HB1, HBk) of the message memory (300) stores, per message, an identifier which identifies the respective message and which allows the message to be associated with a particular communication cycle (KZY), a particular time window (ZF) within the cycle (KZY) and a channel (CH A, CH B) or two channels (CH A, CH B).

7. Method according to one of Claims 1 to 6, **characterized in that** for each of the messages which are considered during a search pass (SDL) and which are to be sent and/or received in one of the plurality of still ensuing time windows (ZF), the buffer store (600) contains two fields ("Pointer", "Status"), wherein a first field ("Pointer") is used to store a pointer to the relevant position of the message stored in the message memory (300), and a second field ("Status") is used to store a status for the message stored in the message memory (300).

8. Method according to Claims 5 and 7, **characterized in that** the pointer points to first data (KD0, KD1, KDk) of the message stored in the message memory (300) which are stored in a head area (HB0, HB1, HBk) in the head segment (HS).

9. Method according to Claim 7 or 8, **characterized in that** the status stored for the message which is stored in the message memory (300) in the buffer store (600) is information regarding whether a message is actually to be received and/or sent for the time window (ZF) under consideration ('empty') and/or whether the message is to be sent ('tx_buf') or received ('rx_buf').

10. Method according to one of Claims 3 to 9, **characterized in that** the buffer store (600) is divided, wherein a first portion (601-604) of the buffer store (600) for the data transmission stores the positions of the messages for the current time window (ZF) and for the subsequent plurality of time windows (ZF8-ZF11), for which the positions of the messages in the message memory (300) have already been stored in the buffer store (600), and a second portion (601a-604a) of the buffer store (600) for a search pass (SDL) is used to store the positions of the messages for the time window (ZF) following the last time window (ZF11) of the data transmission and for the subsequent plurality of time windows (ZF12-ZF15).

11. Method according to one of Claims 1 to 10, **characterized in that** for the purpose of ascertaining the positions of the messages in the message memory (300), the latter is searched at regular intervals for four respective still ensuing time windows (ZF) in advance, and **in that** the result of a search pass is that the positions of the messages to be sent and/or received in the four still ensuing time windows (ZF) are stored in the buffer store (600).

12. Method according to one of Claims 1 to 11, **characterized in that** in the course of a search pass the message memory (300) is searched for the plurality of still ensuing time windows (ZF) on the basis of one or more of the following criteria:
- ascertainment of whether the message memory (300) stores messages for a transmission channel (CH A, CH B) under consideration,
- ascertainment of whether the message memory (300) stores messages for a communication cycle (KZY) under consideration,
- ascertainment of whether the message memory (300) stores messages for the plurality of still ensuing time windows (ZF), and
- ascertainment of whether the ascertained messages are messages to be sent or received.

13. Communication chip (100) which is arranged in a communication system between a communication link (101) and a subscriber, wherein the communication system is designed for cyclically transmitting messages in prescribable time windows and the communication chip (100) has a message memory (300) for buffer-storing messages which are to be transmitted by the subscriber via the communication link (101) or which have been received for the subscriber via the communication link (101), **characterized in that** the communication chip (100) has, for the purpose of ascertaining the positions of the messages in the message memory (300), means for searching the message memory (300) in a prescribable grid for a respective plurality of still ensuing time windows in advance, a buffer store associated with the message memory (300) and means for storing the positions of the messages to be sent and/or received in the plurality of still ensuing time windows in the buffer store (600) as the result of a search pass, and **in that** the search pass in the grid comprises a plurality of time windows (ZF).

14. Communication chip (100) according to Claim 13, **characterized in that** the means for searching the message memory (300) and the means for storing the positions of the ascertained messages in the buffer store (600) are in the form of a state machine (504).

15. Communication chip (100) according to Claim 13 or 14, **characterized in that** the communication chip (100) is in the form of a FlexRay communication chip for receiving, sending and buffer-storing messages transmitted on the basis of a FlexRay specification.

16. Communication chip (100) according to one of Claims 13 to 15, **characterized in that** the means for searching the message memory (300) and the means for storing the positions of the ascertained messages in the buffer store (600) are designed to carry out a method according to one of Claims 2 to 12.

17. Communication system having a plurality of subscribers (102) connected to a communication link (101), where the communication link (101) and at least one of the subscribers (102) have a communication chip (100) arranged between them, wherein the communication system is designed for cyclically transmitting messages in prescribable time windows (ZF) and the communication chip (100) has a message memory (300) for buffer-storing messages which are to be transmitted by the at least one subscriber (102) via the communication link (101) or which have been received for the at least one subscriber (102) via the communication link (101), **characterized in that** the communication chip (100) has, for the purpose of ascertaining the positions of the messages in the message memory (300), means for searching the message memory (100) in a prescribable grid for a respective plurality of still ensuing time windows (ZF) in advance, a buffer store (600) associated with the message memory (300) and means for storing the positions of the messages to be sent and/or received in the plurality of still ensuing time windows (ZF) in the buffer store (600) as the result of a search pass, and **in that** the search pass in the grid comprises a plurality of time windows (ZF).

18. Communication system according to Claim 17, **characterized in that** the communication chip (100) is designed according to one of Claims 14 to 16.

## Revendications

1. Procédé de transmission de données dans des messages qui sont transmis de manière cyclique dans des créneaux temporels (ZF) qui peuvent être prédéfinis par le biais d'une liaison de communication (101) d'un système de communication, les messages à envoyer et envoyés par le biais de la liaison de communication (101) étant tout d'abord mémorisés temporairement dans une mémoire de messages (300) d'un composant de communication (100) et le message à envoyer ou à recevoir dans un créneau temporel (ZF) actuel étant prélevé de la mémoire de messages (300) et envoyé ou reçu et déposé dans la mémoire de messages (300), **caractérisé en ce que** pour déterminer les positions des messages dans la mémoire de messages (300), la mémoire de messages (300) est scrutée à l'avance dans une grille qui peut être prédéfinie à chaque fois pendant plusieurs créneaux temporels (ZF) qui suivent encore, qu'une séquence de scrutation dans la grille inclut plusieurs créneaux temporels (ZF) et que le résultat de la séquence de scrutation est que les positions des messages à envoyer ou à recevoir dans les plusieurs créneaux temporels (ZF) qui suivent encore sont déposés dans une mémoire temporaire (600) associée à la mémoire de messages (300).

2. Procédé selon la revendication 1, **caractérisé en ce que** dans le cadre de la transmission de données, le message à transmettre dans le créneau temporel (ZF) actuel par le biais du système de communication est chargé depuis la position de la mémoire de messages (300) indiquée pour ce créneau temporel (ZF) dans la mémoire temporaire (600) puis transmis par le biais de la liaison de communication (101) ou alors le message transmis dans le créneau temporel (ZF) actuel par le biais de la liaison de communication (101) est déposé à la position de la mémoire de messages (300) indiquée pour ce créneau temporel (ZF) dans la mémoire temporaire (600).

3. Procédé selon la revendication 1 ou 2, **caractérisé en ce que** la transmission de données pendant le créneau temporel (ZF) actuel et les plusieurs créneaux temporels (ZF8 - ZF11) qui suivent, pour lesquels les positions des messages dans la mémoire de messages (300) ont déjà été déposées dans la mémoire temporaire (600), est effectuée après avoir atteint le créneau temporel (ZF8 - ZF11) correspondant simultanément avec la séquence de scrutation (SDL3) pour le créneau temporel (ZF) qui vient se rattacher au dernier créneau temporel (ZF11) de la transmission de données et les plusieurs créneaux temporels (ZF12 - ZF15) qui suivent.

4. Procédé selon l'une des revendications 1 à 3, **caractérisé en ce que** le nombre des plusieurs créneaux temporels de la séquence de scrutation (SDL) est choisi égal au nombre des plusieurs créneaux temporels pour la transmission de données (DAT).

5. Procédé selon l'une des revendications 1 à 4, **caractérisé en ce que** les messages à enregistrer dans la mémoire de messages (300) contiennent des premières données (KD0, KD1, KDk) avec une première teneur en données et des deuxièmes données (D0, D1, Dk) avec une deuxième teneur en données et les premières données (KD0, KD1, KDk) sont enregistrées dans un segment d'entête (HS) de la mémoire de messages (300) à chaque fois dans une zone d'en-tête (HB0, HB1, HBk) par message et les deuxièmes données (D0, D1, Dk) sont enregistrées dans un segment de données (DS) à chaque fois dans une zone de données (DB0, DB1, DBk) par message.

6. Procédé selon la revendication 5, **caractérisé en ce qu'**un identifiant par message est déposé dans la zone d'en-tête (HB0, HB1, HBk) de la mémoire de messages (300), lequel identifiant identifie le message correspondant et par le biais duquel identifiant le message peut être affecté à un cycle de communication (KZY) donné, à un créneau temporel (ZF) donné à l'intérieur du cycle (KZY) et à un canal (CH A, CH B) ou à deux canaux (CH A, CH B).

7. Procédé selon l'une des revendications 1 à 6, **caractérisé en ce que** deux champs (« Pointeur », « État ») sont prévus dans la mémoire temporaire (600) pour chaque message observé pendant une séquence de scrutation (SDL) et à envoyer ou à recevoir dans l'un des plusieurs créneaux temporels (ZF) qui suivent encore, un pointeur vers la position correspondante du message déposé dans la mémoire de messages (300) étant déposé dans un premier champ (« Pointeur ») et un état du message déposé dans la mémoire de messages (300) étant déposé dans un deuxième champ (« État »).

8. Procédé selon les revendications 5 et 7, **caractérisé en ce que** le pointeur pointe vers des premières données (KD0, KD1, KDk) enregistrées dans une zone d'en-tête (HB0, HB1, HBk) dans le segment d'entête (HS) du message déposé dans la mémoire de messages (300).

9. Procédé selon la revendication 7 ou 8, **caractérisé en ce que** l'état du message déposé dans la mémoire de messages (300) est déposé dans la mémoire temporaire (600) sous la forme d'informations indiquant s'il faut effectivement recevoir ou envoyer ('empty') un message pendant le créneau temporel (ZF) considéré et/ou si le message doit être envoyé ('tx_buf') ou reçu ('rx_buf').

10. Procédé selon l'une des revendications 3 à 9, **caractérisé en ce que** la mémoire temporaire (600) est divisée, les positions des messages pour le créneau temporel (ZF) actuel ainsi que pour les plusieurs créneaux temporels (ZF8 - ZF11) qui suivent, pour lesquels les positions des messages dans la mémoire de messages (300) ont déjà été déposées dans la mémoire temporaire (600), étant déposées dans une première partie (601 - 604) de la mémoire temporaire (600) pour la transmission de données, et dans une deuxième partie (601a - 604a) de la mémoire temporaire (600), les positions des messages pour le créneau temporel (ZF) qui vient se rattacher au dernier créneau temporel (ZF11) de la transmission de données ainsi que pour les plusieurs créneaux temporels (ZF12 - ZF15) qui suivent étant déposées pour une séquence de scrutation (SDL).

11. Procédé selon l'une des revendications 1 à 10, **caractérisé en ce que** pour déterminer les positions des messages dans la mémoire de messages (300), celle-ci est scrutée à l'avance à intervalles réguliers à chaque fois pendant quatre créneaux temporels (ZF) qui suivent encore, et que le résultat d'une séquence de scrutation est le dépôt dans la mémoire temporaire (600) des positions des messages à envoyer ou à recevoir dans les quatre créneaux temporels (ZF) qui suivent encore.

12. Procédé selon l'une des revendications 1 à 11, **caractérisé en ce que** dans le cadre d'une séquence de scrutation de la mémoire de messages (300) pendant les plusieurs créneaux temporels (ZF) qui suivent encore, la scrutation est effectuée selon un ou plusieurs des critères ci-après :
- déterminer si des messages pour un canal de transmission (CH A, CH B) considéré sont enregistrés dans la mémoire de messages (300),
- déterminer si des messages pour un cycle de communication (KZY) considéré sont enregistrés dans la mémoire de messages (300),
- déterminer si des messages pour les plusieurs créneaux temporels (ZF) qui suivent encore sont enregistrés dans la mémoire de messages (300), et
- déterminer si les messages déterminés sont des messages à envoyer ou à recevoir.

13. Composant de communication (100) qui est disposé dans un système de communication entre une liaison de communication (101) et un abonné, le système de communication étant configuré pour la communication cyclique de messages dans des créneaux temporels qui peuvent être prédéfinis et le composant de communication (100) présentant une mémoire de messages (300) pour la mémorisation temporaire de messages qui sont à transmettre par l'abonné par le biais de la liaison de communication (101) ou qui ont été reçus par l'abonné par le biais de la liaison de communication (101), **caractérisé en ce que** le composant de communication (100), pour déterminer les positions des messages dans la mémoire de messages (300), présente des moyens pour scruter la mémoire de messages (300) dans une grille qui peut être prédéfinie à chaque fois à l'avance pendant plusieurs créneaux temporels qui suivent encore, une mémoire temporaire associée à la mémoire de messages (300) et des moyens pour déposer les positions des messages à envoyer ou à recevoir dans les plusieurs créneaux temporels qui suivent encore dans la mémoire temporaire (600) en tant que résultat d'une séquence de scrutation et que la séquence de scrutation dans la grille englobe plusieurs créneaux temporels (ZF).

14. Composant de communication (100) selon la revendication 13, **caractérisé en ce que** les moyens de scrutation de la mémoire de messages (300) et les moyens pour déposer les positions des messages déterminés dans la mémoire temporaire (600) sont réalisés sous la forme d'un automate d'état (504).

15. Composant de communication (100) selon la revendication 13 ou 14, **caractérisé en ce que** le composant de communication (100) est réalisé sous la forme d'un composant de communication FlexRay pour recevoir, envoyer et mémoriser temporairement des messages communiqués selon une spécification FlexRay.

16. Composant de communication (100) selon l'une des revendications 13 à 15, **caractérisé en ce que** les moyens de scrutation de la mémoire de messages (300) et les moyens pour déposer les positions des messages déterminés dans la mémoire temporaire (600) sont réalisés pour mettre en oeuvre un procédé selon l'une des revendications 2 à 12.

17. Système de communication comprenant plusieurs abonnés (102) raccordés à une liaison de communication (101), un composant de communication (100) étant disposé entre la liaison de communication (101) et au moins l'un des abonnés (102), le système de communication étant configuré pour la communication cyclique de messages dans des créneaux temporels (ZF) qui peuvent être prédéfinis et le composant de communication (100) présentant une mémoire de messages (300) pour la mémorisation temporaire de messages qui sont à transmettre par ledit au moins un abonné (102) par le biais de la liaison de communication (101) ou qui ont été reçus pour ledit au moins un abonné (102) par le biais de la liaison de communication (101), **caractérisé en ce que** le composant de communication (100), pour déterminer les positions des messages dans la mémoire de messages (300), présente des moyens pour scruter la mémoire de messages (300) dans une grille qui peut être prédéfinie à chaque fois à l'avance pendant plusieurs créneaux temporels (ZF) qui suivent encore, une mémoire temporaire (600) associée à la mémoire de messages (300) et des moyens pour déposer les positions des messages à envoyer ou à recevoir dans les plusieurs créneaux temporels (ZF) qui suivent encore dans la mémoire temporaire (600) en tant que résultat d'une séquence de scrutation et que la séquence de scrutation dans la grille englobe plusieurs créneaux temporels (ZF).

18. Système de communication selon la revendication 17, **caractérisé en ce que** le composant de communication (100) est réalisé selon l'une des revendications 14 à 16.
